# EUROPEAN PATENT APPLICATION

(11) **EP 4 432 762 A1**
(43) Date of publication of application: **18.09.2024**
(21) Application number: 22891273.9
(22) Date of filing: 06.01.2022
(51) Int. Cl.: H04W 72/12

(54) **METHOD AND APPARATUS FOR RE-DEACTIVATION AND DETERMINATION OF SEMI-PERSISTENT SCHEDULING**

(30) Priority: 10.11.2021 WO PCT/CN2021/129893
(71) Applicant: Beijing Xiaomi Mobile Software Co., Ltd., Beijing 100085 (CN)
(72) Inventor: ZHAO, Qun, Beijing 100085 (CN)
(74) Representative: Stöckeler, Ferdinand
(86) International application number: PCT/CN2022/070586
(87) International publication number: WO 2023/082461

(57) **Abstract**

The present disclosure relates to a method and apparatus for re-deactivation and determination of semi-persistent scheduling (SPS). The method for re-deactivation and determination of SPS comprises: determining the type of re-deactivated SPS according to an instruction of a network side device. According to the present disclosure, when the network side device instructs a terminal to re-activate the SPS, the type of the SPS re-activated by the terminal can be indicated, such that the terminal can accurately determine the type of the SPS needing to be re-activated, a corresponding type of SPS is re-activated, a communication with the network side device by means of a configuration of the re-activated SPS is stopped, and a communication effect is prevented from being influenced by re-activating an error type of SPS.

## Description

### CROSS-REFERENCE TO RELATED APPLICATION

This application claims priority to and benefits of International Patent Application No. PCT/CN2021/129893, filed November 10, 2021, the entire content of which is incorporated herein by reference.

### FIELD

The present disclosure relates to the field of communication technology, and more particularly to a method for determining re-deactivation of a semi-persistent scheduling, a method for re-deactivating a semi-persistent scheduling, an apparatus for determining re-deactivation of a semi-persistent scheduling, an apparatus for re-deactivating a semi-persistent scheduling, a communication device, and a computer readable storage medium.

### BACKGROUND

In the related art, a semi-persistent scheduling (SPS) is proposed, which can configure periodic resources for a terminal. After the SPS is activated, when a downlink transmission is performed, it is not necessary to perform downlink resource scheduling, and the terminal receives the downlink transmission according to the configuration of the activated SPS, which is beneficial to saving signaling overhead.

Subsequently, the network device may also indicate the terminal to deactivate the SPS as required. After deactivating the SPS according to the indication from the network device, the terminal stops using the configuration of the SPS to receive the downlink transmission.

In addition, multiple SPSs can be configured for the terminal, and the network can indicate the terminal to deactivate one of the multiple SPSs as required. However, in some cases, based on the deactivation indication sent by the network, the terminal cannot accurately determine which SPS is to be deactivated, thereby causing some problems.

### SUMMARY

In view of the above, embodiments of the present disclosure provide a method for determining re-deactivation of a semi-persistent scheduling, a method for re-deactivating a semi-persistent scheduling, an apparatus for determining re-deactivation of a semi-persistent scheduling, an apparatus for re-deactivating a semi-persistent scheduling, a communication device, and a computer readable storage medium, to solve the technical problems in the related art.

According to a first aspect of embodiments of the present disclosure, there is provided a method for determining re-deactivation of a semi-persistent scheduling, which is performed by a terminal. The method includes: determining a type of the semi-persistent scheduling to be re-deactivated according to an indication from a network device.

According to a second aspect of embodiments of the present disclosure, there is provided a method for re-deactivating a semi-persistent scheduling, which performed by a network device. The method includes: determining a type of the semi-persistent scheduling (SPS) expected to be re-deactivated by a terminal; and providing the terminal with an indication to enable the terminal to determine the type.

According to a third aspect of embodiments of the present disclosure, there is provided an apparatus for determining re-deactivation of a semi-persistent scheduling. The apparatus includes: one or more processors configured to determine a type of the semi-persistent scheduling to be re-deactivated according to an indication from a network device.

According to a fourth aspect of embodiments of the present disclosure, there is provided an apparatus for re-deactivating a semi-persistent scheduling. The apparatus includes: one or more processors configured to: determine a type of the semi-persistent scheduling (SPS) expected to be re-deactivated by a terminal; and provide the terminal with an indication to enable the terminal to determine the type.

According to a fifth aspect of embodiments of the present disclosure, there is provided a communication device, which includes: a processor; and a memory for storing computer programs. When the computer programs are executed by the processor, the method for determining re-deactivation of the semi-persistent scheduling as described above is implemented.

According to a sixth aspect of embodiments of the present disclosure, there is provided a communication device, which includes: a processor; and a memory for storing computer programs. When the computer programs are executed by the processor, the method for re-deactivating the semi-persistent scheduling as described above is implemented.

According to a seventh aspect of embodiments of the present disclosure, there is provided a computer readable storage medium having stored therein computer programs that, when executed by a processor, cause steps in the method for determining re-deactivation of the semi-persistent scheduling as described above to be implemented.

According to an eighth aspect of embodiments of the present disclosure, there is provided a computer readable storage medium having stored therein computer programs that, when executed by a processor, cause steps in the method for re-deactivating the semi-persistent scheduling as described above to be implemented.

According to embodiments of the present disclosure, when the network device indicates the terminal to re-deactivate an SPS, it can indicate the type of the SPS to be re-deactivated by the terminal. In this way, the terminal can accurately determine the type of the SPS that needs to be re-deactivated, and then re-deactivate the SPS of the corresponding type, and stop using the configuration of the re-deactivated SPS to communicate with the network device, thereby avoid re-deactivating a wrong type of SPS to affect the communication effect.

### BRIEF DESCRIPTION OF THE DRAWINGS

In order to illustrate technical solutions in embodiments of the present disclosure more clearly, accompanying drawings to be used in the description of embodiments will be briefly introduced below. Apparently, the drawings described below only show some embodiments of the present disclosure. For those ordinarily skilled in the art, other drawings may also be obtained according to these drawings without any creative effort.
FIG. 1 is a schematic flowchart showing a method for determining re-deactivation of a semi-persistent scheduling according to an embodiment of the present disclosure.
FIG. 2 is a schematic diagram showing a configuration of a group common SPS according to an embodiment of the present disclosure.
FIG. 3 is a schematic flowchart showing another method for determining re-deactivation of a semi-persistent scheduling according to an embodiment of the present disclosure.
FIG. 4 shows a schematic time-domain diagram for re-deactivation according to an embodiment of the present disclosure.
FIG. 5 is a schematic flowchart showing yet another method for determining re-deactivation of a semi-persistent scheduling according to an embodiment of the present disclosure.
FIG. 6 is a schematic flowchart showing yet another method for determining re-deactivation of a semi-persistent scheduling according to an embodiment of the present disclosure.
FIG. 7 shows another schematic time-domain diagram for re-deactivation according to an embodiment of the present disclosure.
FIG. 8 is a schematic flowchart showing yet another method for determining re-deactivation of a semi-persistent scheduling according to an embodiment of the present disclosure.
FIG. 9 shows yet another schematic time-domain diagram for re-deactivation according to an embodiment of the present disclosure.
FIG. 10 is a schematic flowchart showing a method for re-deactivating a semi-persistent scheduling according to an embodiment of the present disclosure.
FIG. 11 is a schematic flowchart showing another method for re-deactivating a semi-persistent scheduling according to an embodiment of the present disclosure.
FIG. 12 is a schematic flowchart showing yet another method for re-deactivating a semi-persistent scheduling according to an embodiment of the present disclosure.
FIG. 13 is a schematic flowchart showing yet another method for re-deactivating a semi-persistent scheduling according to an embodiment of the present disclosure.
FIG. 14 is a schematic flowchart showing yet another method for re-deactivating a semi-persistent scheduling according to an embodiment of the present disclosure.
FIG. 15 is a schematic block diagram showing an apparatus for re-deactivating a semi-persistent scheduling according to an embodiment of the present disclosure.
FIG. 16 is a schematic block diagram showing an apparatus for determining re-deactivation of a semi-persistent scheduling according to an embodiment of the present disclosure.

### DETAILED DESCRIPTION

Technical solutions in embodiments of the present disclosure will be described clearly and thoroughly below with reference to accompanying drawings in embodiments of the present disclosure. Apparently, the embodiments described herein are only some embodiments, rather than all embodiments of the present disclosure. All other embodiments obtained by those ordinarily skilled in the art based on embodiments described herein without creative labors shall belong to the protection scope of the present disclosure.

Terms used in embodiments of the present disclosure are only for the purpose of describing specific embodiments, and not intended to limit embodiments of the present disclosure. As used in embodiments of the present disclosure and the appended claims, "a/an" and "the" in a singular form are intended to include plural forms, unless clearly indicated in the context otherwise. It also should be understood that, the term "and/or" used herein represents and includes any or all possible combinations of one or more associated items listed.

It should be understood that even though terms such as "first," "second" and "third" may be used in embodiments of the present disclosure for describing various information, these information should not be limited by these terms. These terms are only used for distinguishing information of the same type from each other. For example, a first RNTI may also be referred to as a second RNTI, and similarly, a second RNTI may also be referred to as a first RNTI, without departing from the scope of embodiments of the present disclosure. Depending on the context, the term "if' as used herein may be construed as "when", "upon" or "in response to determining".

For the purposes of brevity and ease of understanding, terms "greater than" or "less than", "higher than" or "lower than" are used herein for indicating a size relationship. However, it may be understood by a person skilled in the art that the term "greater than" also covers a meaning of "greater than or equal to", the term "less than" also covers a meaning of "less than or equal to"; the term "higher than" also covers a meaning of "higher than or equal to", and the term "lower than" also covers a meaning of "lower than or equal to".

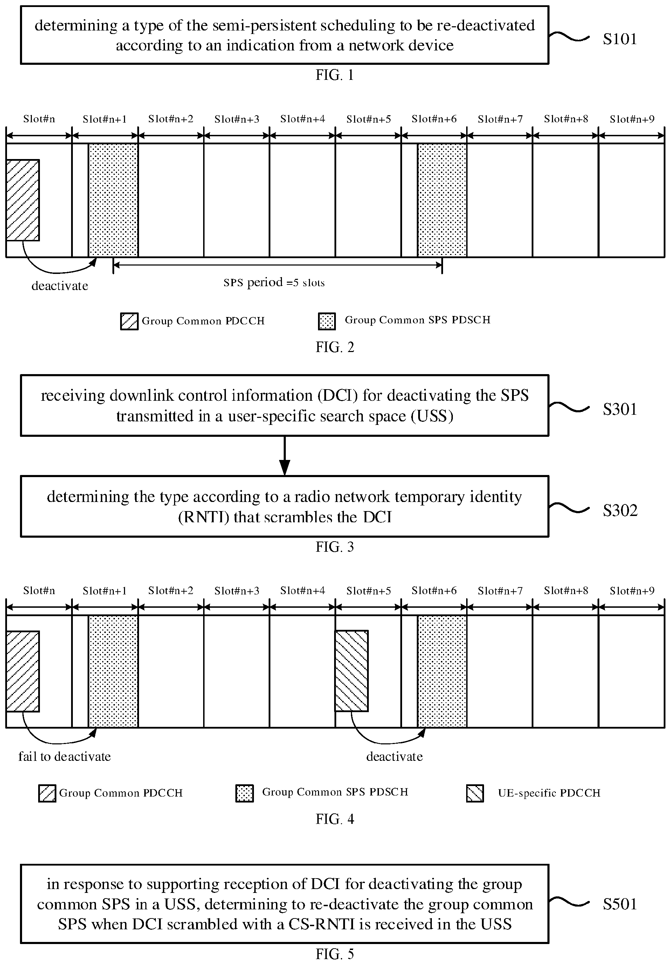

FIG. 1 is a schematic flowchart showing a method for determining re-deactivation of a semi-persistent scheduling according to an embodiment of the present disclosure. The method for determining re-deactivation of the semi-persistent scheduling shown in this embodiment may be performed by a terminal. The terminal includes, but is not limited to, communication devices, like a mobile phone, a tablet computer, a wearable device, a sensor, or an Internet of Things device. The terminal can communicate with a network device, and the network device includes, but is not limited to, network devices in 4G, 5G, or 6G communication systems, such as a base station, a core network, etc.

In an embodiment, the network device can configure one or more sets of SPS configurations for the terminal. When a certain SPS needs to be used, the network device can provide the terminal with an indication, so that the terminal activates the certain one SPS, and receives downlink information according to a configuration of the SPS activated.

Subsequently, the network device may also indicate the terminal to deactivate the SPS as required. After deactivating the SPS according to the indication from the network device, the terminal stops using the configuration of the SPS to receive the downlink transmission. However, in some cases, some terminals fail to correctly decode the indication sent by the network device, and thus cannot correctly determine the SPS that needs to be deactivated. The network device can determine whether a terminal has correctly decoded the indication according to information fed back by the terminal, and may re-indicate the terminal to re-deactivate the SPS when it determines that the terminal has not correctly decoded the indication.

The network device may configure various types of SPSs for the terminal. The technical solutions of the present disclosure will be described below with reference to embodiments where the network device configures for the terminal a configuration of a group common semi-persistent scheduling (group common SPS) and a configuration of a user equipment-specific semi-persistent scheduling (UE-specific SPS).

For the group common SPS, during an initial deactivation, downlink control information (DCI) scrambled with a group scheduled-radio network temporary identity (GS-RNTI) may be transmitted in a group common physical downlink control channel (PDCCH) to indicate the deactivation. After receiving the indication, the terminal can decode the DCI and determine an RNTI used for decoding, and then determine according to the RNTI (specifically, a value of the RNTI) that the SPS that needs to be deactivated is the group common SPS.

It should be noted that scrambling the DCI described in all embodiments of the present disclosure may specifically refer to scrambling a cyclic redundancy check (CRC) of the DCI, which is referred to as scrambling the DCI for short.

The terminal may be a terminal supporting a multicast broadcast service (MBS), and the terminal may also support a unicast service.

The above-mentioned group common SPS may be configured to terminals in a same group. However, because different terminals belonging to the same group may have different channel transmission conditions, some terminals can correctly demodulate and determine the RNTI, while some terminals cannot correctly demodulate and determine the RNTI. Terminals that correctly demodulate and determine the RNTI may return acknowledgment information (ACK) to the network device, and terminals that fail to correctly demodulate and determine the RNTI may return non-acknowledgment information (NACK) to the network device. The network device can determine which terminal does not correctly demodulate and determine the RNTI according to the received feedback.

For a terminal that fails to correctly demodulate and determine the RNTI, the network device may re-indicate the terminal to re-deactivate the group common SPS. At present, a way to re-indicate the terminal is realized through a user equipment-specific physical downlink control channel (UE-specific PDCCH), but currently the UE-specific PDCCH is mainly used to deactivate the user equipment-specific semi-persistent scheduling (UE-specific SPS). When the UE-specific PDCCH is used to deactivate the group common SPS, it is difficult for the terminal to determine which type of SPS is intended to be deactivated by the UE-specific PDCCH.

As shown in FIG. 1, the method for determining re-deactivation of the semi-persistent scheduling may include a following step.

In step S101, a type of the semi-persistent scheduling to be re-deactivated is determined according to an indication from a network device.

In an embodiment, when the network device indicates the terminal to re-deactivate the SPS, it can indicate the type of the SPS to be re-deactivated by the terminal, so that the terminal can accurately determine the type of the SPS that needs to be re-deactivated, and then re-deactivate the SPS of the corresponding type, and stop using the configuration of the SPS re-deactivated to communicate with the network device, for example, stop receiving downlink information, thereby avoid re-deactivating a wrong type of SPS to affect the communication effect.

In an embodiment, the type includes at least one of: a group common semi-persistent scheduling (group common SPS); or a user equipment-specific semi-persistent scheduling (UE-specific SPS).

The network device may indicate the terminal to re-deactivate the group common SPS or the UE-specific SPS. When the terminal determines to re-deactivate the group common SPS according to the indication, it can re-deactivate the group common SPS and stop using the configuration of the group common SPS to communicate with the network device. When the terminal determines to re-deactivate the UE-specific SPS according to the indication, it can re-deactivate the UE-specific SPS, and stop using the configuration of the UE-specific SPS to communicate with the network device.

In an embodiment, the indication from the network device includes at least one of: an explicit indication or an implicit indication.

The network device may indicate the terminal in an explicit way. For example, the network device may send to the terminal one or more pieces of information carrying contents that directly indicate the type. The network device may indicate the terminal in an implicit way. For example, the network device sends information to the terminal, and the information has other functions and is not directly used to indicate the type. The terminal can determine the type of the SPS to be re-deactivated according to the information in some ways. For example, the information is DCI in a UE-specific search space (USS), the DCI is scrambled with the RNTI and is not used to indicate the type, but the terminal can determine the type according to the RNTI that scrambles the DCI.

FIG. 2 is a schematic diagram showing a configuration of a group common SPS according to an embodiment of the present disclosure.

As shown in FIG. 2, for example, for a terminal supporting the MBS, the network device configures at least the configuration of the group common SPS for the terminal, and a period of the group common SPS is 5 slots. For example, as shown in FIG. 2, for the physical downlink shared channel (PDSCH) of the group common SPS, one is in slot#n+1, the next one is in slot#n+6, with an interval of 5 slots.

The network device initially deactivates the group common SPS in slot#n. For example, the network device sends a group common PDCCH to terminals belonging to the same group in the slot#n, and DCI in the group common PDCCH is scrambled with GS-RNTI. If the terminal correctly demodulates and determines an RNTI corresponding to the DCI, it can stop using the configuration of the group common PDCCH to communicate with the network device, for example, the terminal stop receiving the PDSCH of the group common SPS in slot#n+1 and slot#n+6.

The network device can determine whether each terminal correctly demodulates and determines the RNTI corresponding to the DCI according to information fed back by the terminal. For example, if the terminal returns the acknowledgment information (ACK), the network device determines that the terminal correctly demodulates and determines the RNTI; and if the terminal returns the non-acknowledgment information (NACK), the network device determines that the terminal fails to correctly demodulate and determine the RNTI.

In addition, if the network device also configures the configuration of the UE-specific SPS for the terminal, it can transmit DCI scrambled with a configured scheduled-radio network temporary identity (CS-RNTI) in the USS for re-deactivation.

The following embodiments illustrate several ways in which the network device indicates the terminal to re-deactivate the group common SPS on the basis of embodiments shown in FIG. 2.

FIG. 3 is a schematic flowchart showing another method for determining re-deactivation of a semi-persistent scheduling according to an embodiment of the present disclosure. As shown in FIG. 3, determining the type of the semi-persistent scheduling to be re-deactivated according to the indication from the network device includes the following steps.

In step S301, downlink control information (DCI) for deactivating the SPS transmitted in a UE-specific search space (USS) is received.

In step S302, the type is determined according to a radio network temporary identity (RNTI) that scrambles the DCI.

It should be noted that, the terminal may determine whether the DCI is DCI for deactivating the SPS through a specified manner, with a determination condition including at least one of:
the CRC of the DCI being scrambled with the CS-RNTI, or being scrambled with the GS-RNTI;
a new data indicator (NDI) field in the DCI being 0;
a DCI format indicator (DFI) field in the DCI being 0 if the DFI exists in the DCI; or
the DCI including a PDSCH-to-HARQ (hybrid automatic repeat request) feedback timing indicator field for indicating available uplink subframes.

After the above determination, the terminal can further determine whether a validation field in the DCI satisfies a deactivation condition. If the validation field in the DCI satisfies the deactivation condition, the terminal determines how to receive the PDSCH of the SPS according to high-level configuration information corresponding to the configuration of the SPS that needs to be deactivated and dynamic scheduling information in the DCI.

In an embodiment, the network device may transmit the DCI for deactivating the SPS in the USS. For example, the DCI is carried in the UE-specific PDCCH, to indicate a terminal that fails to correctly demodulate and determine the RNTI to re-deactivate the group common SPS.

A correspondence between RNTIs and types of the SPS may be pre-stored in the terminal, and the correspondence is, for example, specified in a protocol or pre-configured by the network device. After receiving the DCI for deactivating the SPS in the USS, the terminal can determine the RNTI that scrambles the DCI. For example, the DCI is descrambled with RNTIs, and an RNTI that successfully descrambles the DCI corresponds to the RNTI that scrambles the DCI, so that the RNTI that scrambles the DCI can be determined according to the RNTI that successfully descrambles the DCI, and then the type of the SPS corresponding to the RNTI that scrambles the DCI is determined according to the RNTI that scrambles the DCI and the correspondence between RNTIs and types of the SPS.

FIG. 4 shows a schematic time-domain diagram for re-deactivation according to an embodiment of the present disclosure.

As shown in FIG. 4, the terminal fails to correctly demodulate and determine the RNTI corresponding to the DCI for deactivating the group common SPS in slot#n, and the network device may send a UE-specific PDCCH (which carries DCI scrambled with an RNTI) to the terminal, for example, in slot#n+5, to indicate the terminal to re-deactivate the group common SPS. After re-deactivating the group common SPS, the terminal stops using the configuration of the group common SPS to communicate with the network device, for example stops receiving the PDSCH of the group common SPS in slot#n+6.

In an embodiment, determining the type according to the RNTI that scrambles the DCI includes: in response to the RNTI that scrambles the DCI being a first RNTI, determining to re-deactivate the group common SPS; and/or in response to the RNTI that scrambles the DCI being a second RNTI, determining to re-deactivate the UE-specific SPS.

The correspondence between RNTIs and types of the SPS may be pre-stored in the terminal, and the correspondence is, for example, specified in a protocol or pre-configured by the network device. In this correspondence, the first RNTI corresponds to the group common SPS, and the second RNTI corresponds to the UE-specific SPS.

The first RNTI and/or the second RNTI may be different from RNTI(s) in the related art, or may reuse the RNTI(s) in the related art, which may be specifically determined as required.

In an embodiment, the first RNTI is different from a GS-RNTI for scrambling DCI for initially deactivating the group common SPS, and/or is different from a configured scheduled-radio network temporary identity (CS-RNTI) for scrambling DCI for initially deactivating the UE-specific SPS.

The DCI for initially deactivating the group common SPS is transmitted in a common search space (CSS), and information transmitted in the CSS can be received by multiple terminals. The DCI for initially deactivating the UE-specific SPS is transmitted in the USS, and information transmitted in the USS is generally only be received by a designated terminal.

However, in some cases, there exists an overlapping part between the CSS and the USS. If the DCI for deactivating the SPS transmitted in the USS happens to be in this overlapping part, the DCI for deactivating the SPS transmitted in the USS will be received by multiple terminals. If the RNTI that scrambles the DCI for deactivating the SPS transmitted in the USS is the same as the CS-RNTI for scrambling the DCI for initially deactivating the UE-specific SPS or the GS-RNTI for scrambling the DCI for initially deactivating the group common SPS, other terminals, after receiving the DCI for deactivating the SPS transmitted in the USS, will deactivate respective SPSs according to the successfully decoded and determined RNTI, causing other terminal to erroneously deactivate the SPS.

Therefore, according to embodiments of the present disclosure, a new RNTI may be introduced as the first RNTI, which is different from the GS-RNTI for scrambling the DCI for initially deactivating the group common SPS and the CS-RNTI for scrambling the DCI for initially deactivating the UE-specific SPS, so as to prevent other terminals from erroneously deactivating the SPS.

In an embodiment, the first RNTI is the same as the GS-RNTI for scrambling the DCI for initially deactivating the group common SPS.

Although the introduction of the new RNTI as the first RNTI can prevent other terminals from erroneously deactivating the SPS, the introduction of the new RNTI will bring relatively large adjustments to the communication architecture, and the erroneous deactivation of the SPS generally occurs in a not very common case where the CSS partially overlaps the USS.

In view of this, in embodiments of the present disclosure, the GS-RNTI for scrambling the DCI for initially deactivating the group common SPS may be reused to scramble the DCI for deactivating the SPS transmitted in the USS. After receiving the DCI for deactivating the SPS transmitted in the USS, the terminal can determine that the network device indicates the terminal to re-deactivate the group common SPS when the RNTI that scrambles the DCI is determined to be the GS-RNTI. In this way, it is advantageous to reducing modifications to the communication architecture.

FIG. 5 is a schematic flowchart showing yet another method for determining re-deactivation of a semi-persistent scheduling according to an embodiment of the present disclosure. As shown in FIG. 5, determining the type of the semi-persistent scheduling to be re-deactivated according to the indication from the network device includes a following step.

In step S501, in response to supporting reception of the DCI for deactivating the group common SPS in the USS, when the DCI scrambled with the CS-RNTI is received in the USS, it is determined to re-deactivate the group common SPS.

In an embodiment, it may be specified in advance in a protocol that in a case where the terminal supports reception of the DCI for deactivating the group common SPS in the USS, when the terminal receives the DCI scrambled with the CS-RNTI in the USS, it is considered by default that the network device indicates the terminal to re-deactivate the group common SPS.

Then, when the terminal itself supports reception of the DCI for deactivating the group common SPS in the USS, if the terminal receives the DCI scrambled with the CS-RNTI in the USS, it may be considered by default that the network device indicates the terminal to re-deactivate the group common SPS, so that the terminal re-deactivates the group common SPS, rather than considering that the network device indicates the terminal to re-deactivate the UE-specific SPS.

In an embodiment, the terminal is configured with the group common SPS and not configured with the UE-specific SPS.

Since when the terminal receives the DCI scrambled with the CS-RNTI in the USS, it will not consider that the network device indicates the terminal to re-deactivate the UE-specific SPS, and thus it will not re-deactivate the UE-specific SPS, which, to a certain extent, will result in that the UE-specific SPS cannot be successfully re-deactivated, even if the terminal is configured with the configuration of the UE-specific SPS. In view of this, for this case, the network device may choose to only configure the configuration of the group common SPS for the terminal, not configure the configuration of the UE-specific SPS for the terminal, so as to reducing waste of resources.

Certainly, it is also possible that the network device configures both the configuration of the group common SPS and the configuration of the UE-specific SPS for the terminal, which may be selected as required.

In an embodiment, determining the type of the semi-persistent scheduling to be re-deactivated according to the indication from the network device includes: in response to supporting reception of the DCI for deactivating the group common SPS in a preset USS, determining to re-deactivate the group common SPS when the DCI scrambled with the CS-RNTI is received in the preset USS.

In an embodiment, it may be specified in advance in a protocol that in a case where the terminal supports reception of the DCI for deactivating the group common SPS in the preset USS, when the terminal receives the DCI scrambled with the CS-RNTI in the preset USS, it is considered by default that the network device indicates the terminal to re-deactivate the group common SPS.

Then, when the terminal itself supports reception of the DCI for deactivating the group common SPS in the preset USS, if the terminal receives the DCI scrambled with the CS-RNTI in the preset USS, it may be considered by default that the network device indicates the terminal to re-deactivate the group common SPS, so that the terminal re-deactivates the group common SPS, rather than considering that the network device indicates the terminal to re-deactivate the UE-specific SPS.

When the DCI scrambled with the CS-RNTI is received in other USSs other than the preset USS, it may be considered that the network device indicates the terminal to re-deactivate the UE-specific SPS, so that the terminal re-deactivates the UE-specific SPS. A difference from embodiments shown in FIG. 5 lies in that in this embodiment, only for the DCI that is scrambled with the CS-RNTI and transmitted in the preset USS, the terminal considers by default that it indicates to re-deactivate the group common SPS, while for the DCI that is scrambled with the CS-RNTI and transmitted in other USSs, the terminal does not consider by default that it indicates to re-deactivate the group common SPS.

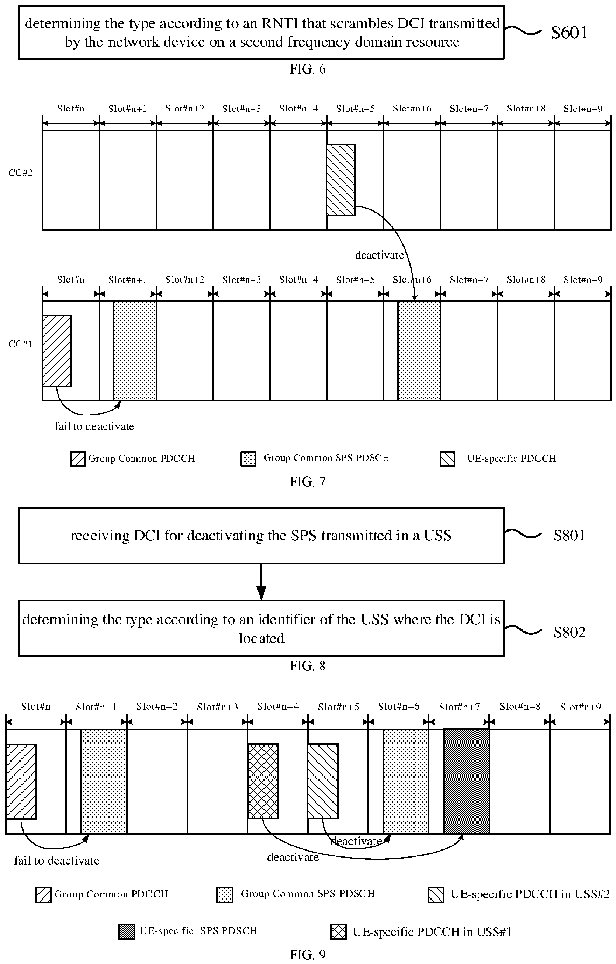

FIG. 6 is a schematic flowchart showing yet another method for determining re-deactivation of a semi-persistent scheduling according to an embodiment of the present disclosure. As shown in FIG. 6, the terminal is configured with the group common SPS and/or the UE-specific SPS on a first frequency domain resource, and determining the type of the semi-persistent scheduling to be re-deactivated according to the indication from the network device includes a following step.

In step S601, the type is determined according to an RNTI that scrambles DCI transmitted by the network device on a second frequency domain resource.

It should be noted that the DCI may be in the USS of the terminal. However, in a case where the second frequency domain resource is exclusively configured for the terminal, the DCI may be in the USS of the terminal, or may not be in the USS of the terminal.

In an embodiment, the group common SPS and/or the UE-specific SPS configured by the network device for the terminal may be specific to the first frequency domain resource. In this case, the network device may transmit the DCI scrambled with the RNTI on the second frequency domain resource to indicate the type of the SPS that needs to be re-deactivated by the terminal.

Certainly, the network device may also transmit the DCI scrambled with the RNTI on the first frequency domain resource to indicate the type of the SPS that needs to be re-deactivated by the terminal, which may be specifically selected by the network device as required.

In an embodiment, the first frequency domain resource includes a first component carrier (CC), and the second frequency domain resource includes a second CC; and/or the first frequency domain resource includes a first bandwidth part (BWP), and the second frequency domain resource includes a second BWP.

FIG. 7 shows another schematic time-domain diagram for re-deactivation according to an embodiment of the present disclosure.

As shown in FIG. 7, for example, the network device configures the group common SPS and the UE-specific SPS for the terminal on the first CC, and the terminal fails to correctly demodulate and determine the RNTI corresponding to the DCI for deactivating the group common SPS in slot#n, the network device can send the UE-specific PDCCH (which carries the DCI scrambled with the RNTI) to the terminal on the second CC, for example, in slot#n+5, to indicate the terminal to re-deactivate the group common SPS on the first CC, and the terminal re-deactivates the group common SPS, and stops using the configuration of the group common SPS to communicate with the network device, for example, the terminal stops receiving the PDSCH of the group common SPS in slot#n+6.

For example, the network device configures the group common SPS and the UE-specific SPS for the terminal on the first BWP, and the network device can send the DCI scrambled with the RNTI to the terminal in the USS on the second BWP to indicate the terminal whether to re-deactivate the group common SPS or to re-deactivate the UE-specific SPS.

It should be noted that, in embodiments of the present disclosure, the format of the DCI may be DCI format 1_1 or DCI format 1_2. Since the DCI in these two formats can carry frequency domain related information, it is convenient to indicate a frequency domain resource where the SPS to be deactivated is located, for example, indicate the CC, the BWP or the like where the SPS to be deactivated is located.

FIG. 8 is a schematic flowchart showing yet another method for determining re-deactivation of a semi-persistent scheduling according to an embodiment of the present disclosure. As shown in FIG. 8, determining the type of the semi-persistent scheduling to be re-deactivated according to the indication from the network device includes the following steps.

In step S801, the DCI for deactivating the SPS transmitted in the USS is received.

In step S802, the type is determined according to an identifier of the USS where the DCI is located.

In an embodiment, a correspondence between identifiers (for example, IDs) of the USS and types of the SPS may be pre-stored in the terminal, and the correspondence is, for example, specified in a protocol or pre-configured by the network device.

After receiving the DCI for deactivating the SPS in the USS, the terminal can determine the identifier of the USS where the DCI is located, and then determine the type of the SPS corresponding to the identifier according to the correspondence between identifiers and types of the SPS.

FIG. 9 shows yet another schematic time-domain diagram for re-deactivation according to an embodiment of the present disclosure.

As shown in FIG. 9, for example, the network device configures at least two USS identities for the terminal, which are USS#1 and USS#2. In the correspondence between identifiers of the USS and types of the SPS pre-stored in the terminal, USS#1 corresponds to the UE-specific SPS, and the USS#2 corresponds to the group common SPS.

The terminal fails to correctly demodulate and determine the RNTI corresponding to the DCI for deactivating the group common SPS in slot#n, the network device can send the UE-specific PDCCH to the terminal in slot#n+5, and the DCI scrambled with the RNTI carried therein is in the USS corresponding to the USS#2. After receiving the DCI carried in the UE-specific PDCCH transmitted in the slot#n+5, the terminal can determine that the DCI is in the USS corresponding to the USS#2, and can determine that the USS#2 corresponds to the group common SPS, and thus deactivate the group common SPS, and subsequently, the terminal can stop receiving downlink information in the PDSCH corresponding to the group common SPS (for example, located in slot#n+6).

In addition, the terminal may also send the UE-specific PDCCH to the terminal in the USS corresponding to the USS#1 as required, for example, send the UE-specific PDCCH to the terminal in slot#n+4. The terminal receives the DCI carried in the UE-specific PDCCH transmitted in the slot#n+4, and can determine that the DCI is in the USS corresponding to the USS#1, and determine that the USS#1 corresponds to the UE-specific SPS, and thus deactivate the UE-specific SPS, and subsequently, the terminal can stop receiving downlink information in the PDSCH corresponding to the UE-specific SPS (for example, in slot#n+6).

In the above embodiments, the ways in which the network device indicates the terminal to deactivate which SPS are mainly implicit ways. That is, the type of the SPS that needs to be deactivated by the terminal is not directly indicated by the DCI, but by the RNTI that scrambles the DCI. In the following embodiments, technical solutions of the present disclosure will be described with reference to an explicit indication.

In an embodiment, determining the type of the semi-persistent scheduling to be re-deactivated according to the indication from the network device includes: determining the type according to indication information sent by the network device.

In an embodiment, the indication information includes at least one of: a medium access control layer control element (MAC CE); a radio access control (RRC) signaling; or downlink control information (DCI).

In an embodiment, the network device may indicate the type of the SPS that needs to be deactivated by the terminal by an explicit indication. For example, the network device may send one or more pieces of indication information to the terminal, and contents carried in the one or more pieces of indication information directly indicate the type. The indication information may be sent in a form of the MAC CE, may be sent in a form of the RRC signaling, and may also be sent in a form of the DCI, which may be selected as required.

In an embodiment, the indication information includes the DCI, and determining the type according to the indication information sent by the network device includes: determining the type according to an information field other than a validation field in the DCI.

In an embodiment, when the network device indicates the terminal the type of the SPS to be deactivated via the DCI, for example indicates the terminal to deactivate the group common SPS, or indicates the terminal to deactivate the UE-specific SPS, the network device may indicate the terminal by using some information fields in the DCI. However, for the validation field in the DCI, because bits in the validation field are used for validation, if they are changed, a series of problems will be caused. Therefore, in this embodiment, when the DCI is used to indicate the type of the SPS to be deactivated by the terminal, the information field other than the validation field is used to carry the indication. Correspondingly, after receiving the DCI, the terminal can determine the type of the SPS to be deactivated according to the information field other than the validation field in the DCI, so as to avoid problems caused by changing the bits in the validation field.

In an embodiment, determining the type according to the information field other than the validation field in the DCI includes: determining the type according to a hybrid automatic repeat request (HARQ) process number field (HPN field for short) in the DCI.

In an embodiment, the terminal has multiple sets of SPS configurations of the type, and the method further includes: determining to deactivate a target SPS configuration in the multiple sets of SPS configurations of the type according to a value of the HPN field.

In an embodiment, the network device indicates the type by using the information field other than the validation field in the DCI.

For example, specifically, the type may be indicated by using the HPN field in the DCI. Correspondingly, after receiving the DCI, the terminal may determine the type of the SPS to be deactivated according to the HPN field in the DCI.

It should be noted that the HPN field can also be used as the validation field in some cases, for example, when only one set of SPS configuration is configured for the terminal. The network device indicates the type through the HPN field when the HPN field is not used as the validation field. For example, the type is indicated by one bit of the HPN field, with the value of 1 indicating the group common SPS, and the value of 0 indicating the UE-specific SPS.

In addition, regarding some information fields in the DCI, such as a frequency domain resource assignment (FDRA) field, a redundancy version (RV) field, a modulation and coding scheme (MCS) field, these information fields can also be used as the validation field in some cases. When the terminal indicates the type through these information fields, it is required that these information fields are not used as the validation field.

In an embodiment, the type of the SPS to be deactivated can be determined according to the information field other than the validation field in the DCI. The information field other than the validation field in the DCI is an information field of non-validation fields in the DCI other than the FDRA, RV, MCS, and HPN fields, for example, the type of the SPS to be deactivated may be indicated by one bit, with the value of 0 indicating the UE-specific SPS, and the value of 1 indicating the group common SPS.

In an embodiment, for a certain type of SPS, the terminal may have multiple sets of SPS configurations, for example, the multiple sets of SPS configurations may have different parameters, such as different periods. The multiple sets of SPS configurations may be configured by the network device, or may be specified in a protocol.

When the terminal has multiple sets of SPS configurations of the type, when the network device indicates the type of the SPS to be deactivated by the terminal through the HPN field, the network device can further indicate the terminal to deactivate which set of SPS configuration of the type through the HPN field, and the set of SPS configuration to be deactivated is for example called the target SPS configuration.

The network device and the terminal each may store an association relationship between values of the HPN field and SPS configurations. When the network device deactivates a set of SPS configuration by using a value of the HPN field, the terminal can determine the set of SPS configuration corresponding to the value of the HPN field according to the association relationship, and then deactivate the set of SPS configuration. Accordingly, the deactivation of a certain set of SPS configuration can be realized, which is beneficial to improving the accuracy of deactivating the SPS.

For example, the HPN field has 4 bits, which can indicate values of 0 to 15. For example, the terminal has 8 sets of SPS configurations for the UE-specific SPS, and their indexes are 0 to 7 respectively. A first association relationship between values of the HPN field and SPS configurations of the UE-specific SPS includes that the value of 0 is associated with the index of 0, the value of 1 is associated with the index of 1, the value of 2 is associated with the index of 2, the value of 3 is associated with the index of 3, the value of 4 is associated with the index of 4, the value of 5 is associated with the index of 5, the value of 6 is associated with the index of 6, and the value of 7 is associated with the index of 7.

When the UE-specific SPS needs to be deactivated, the network device can provide an indication through the value of the HPN field ranging from 0 to 7. For example, when the SPS configuration corresponding to the index of 1 is to be deactivated, the value of the HPN field in the DCI sent by the network device may be 1. After receiving the DCI, the terminal determines that the value of the HPN field in the DCI is 1, and can determine according to the first association relationship that the corresponding index is 1, so that the terminal can deactivate the SPS configuration of the UE-specific SPS corresponding to the index of 1.

In an embodiment, the terminal may be configured with any one or more of multiple types of SPSs, for example, the terminal is configured with multiple types of SPSs, and there are multiple sets of SPS configurations for each type of SPS. The network device can deactivate one of multiple sets of SPS configurations of a type of SPS through the HPN field, and can also deactivate one of multiple sets of SPS configurations of another type of SPS through the HPN field.

For example, in the above-mentioned embodiments, the terminal has 8 sets of SPS configurations of the UE-specific SPS, and the network device can indicate the terminal to deactivate any one of the 8 sets of SPS configurations through the value of the HPN field ranging from 0 to 7.

On this basis, the terminal may also have 8 sets of SPS configurations (which for example are configured by the network device or determined according to a protocol) for the group common SPS, and their indexes are 0 to 7, respectively. A second association relationship between values of the HPN field and SPS configurations of the group common SPS includes that the value of 8 is associated with the index of 0, the value of 9 is associated with the index of 1, the value of 10 is associated with the index of 2, the value of 11 is associated with the index of 3, the value of 12 is associated with the index of 4, the value of 13 is associated with the index of 5, the value of 14 is associated with the index of 6, and the value of 15 is associated with the index of 7.

When the group common SPS needs to be deactivated, the network device can provide an indication through the value of the HPN field ranging from 8 to 15. For example, when the SPS configuration corresponding to the index of 3 is to be deactivated, the value of the HPN field in the DCI sent by the network device may be 10. After receiving the DCI, the terminal determines that the value of the HPN field in the DCI is 1, and can determine according to the second association relationship that the corresponding index is 2, so that the terminal can deactivate the SPS configuration of the group common SPS corresponding to the index of 2.

In an embodiment, the terminal can determine to deactivate which set of SPS configuration of the group common SPS according to a formula mod(HPN value, M), where the HPN value represents a value corresponding to the HPN field, M represents a number of SPS configurations of the group common SPS, and mod represents a modulo operation. When the HPN value is greater than or equal to 8, the terminal determines to deactivate which set of SPS configuration of the group common SPS according to this formula.

For example, when M=8, and the SPS configuration corresponding to the index of 3 is to be deactivated, the value of the HPN field (i.e., the HPN value) in the DCI sent by the network device may be 10. The terminal brings the HPN value=10 and M=8 into the above formula to calculate mod(10,8) to obtain a value of 2, and then can determine to deactivate the SPS configuration of the group common SPS corresponding to the index of 2.

It should be noted that the number of the SPS configurations of the UE-specific SPS that the terminal has is not limited to 8 as described in the above embodiments, and the number of the SPS configurations of the group common SPS that the terminal has is also not limited to 8 as described in the above embodiments, both of which can be specifically set as required.

In an embodiment, the range of the HPN value for indicating the group common SPS may be determined according to the number of the SPS configurations of the UE-specific SPS and the number of the SPS configurations of the group common SPS. For example, if the network device has configured 4 SPS configurations for the UE-specific SPS and 4 SPS configurations for the group common SPS, the HPN values of 0-3 are used to indicate to deactivate the UE-specific SPS index, and the HPN values of 4-7 are used to indicate to deactivate the group common SPS index.

In an embodiment, the terminal is configured with the group common SPS and the UE-specific SPS, and the method further includes: in response to determining that the network device activates one of the group common SPS and the UE-specific SPS, not expecting the network device to activate another one of the group common SPS and the UE-specific SPS by using the DCI scrambled with the CS-RNTI.

In an embodiment, when the terminal is configured with both of the group common SPS and the UE-specific SPS, since in general, the terminal cannot use both the group common SPS and the UE-specific SPS at the same time, so when the network device has activated one of the group common SPS and the UE-specific SPS, the terminal does not expect the network device to activate another one of the group common SPS and the UE-specific SPS by using the DCI scrambled with the CS-RNTI.

For example, when the network device has activated the group common SPS, the terminal does not expect the network device to activate the UE-specific SPS by using the DCI scrambled with the CS-RNTI. For example, when the network device has activated the UE-specific SPS, the terminal does not expect the network device to activate the group common SPS by using the DCI scrambled with the CS-RNTI.

In an embodiment, the terminal is configured with the group common SPS and the UE-specific SPS, and the method further includes: in response to determining that the network device activates one of the group common SPS and the UE-specific SPS, not expecting the network device to deactivate another one of the group common SPS and the UE-specific SPS by using the DCI scrambled with the CS-RNTI.

In an embodiment, when the terminal is configured with both of the group common SPS and the UE-specific SPS, since in general, the terminal cannot use both the group common SPS and the UE-specific SPS at the same time, so when the network device has activated one of the group common SPS and the UE-specific SPS, another one of the group common SPS and the UE-specific SPS is generally not activated, so the terminal does not expect the network device to deactivate the another one of the group common SPS and the UE-specific SPS by using the DCI scrambled with the CS-RNTI.

For example, when the network device has activated the group common SPS, the terminal does not expect the network device to deactivate the UE-specific SPS by using the DCI scrambled with the CS-RNTI. That is, in this case, when the terminal receives the DCI scrambled with the CS-RNTI, the terminal deactivates the group common SPS according to the DCI scrambled with the CS-RNTI by default.

For example, when the network device has activated the UE-specific SPS, the terminal does not expect the network device to deactivate the group common SPS by using the DCI scrambled with the CS-RNTI. That is, in this case, when the terminal receives the DCI scrambled with the CS-RNTI, the terminal deactivates the UE-specific SPS according to the DCI scrambled with the CS-RNTI by default.

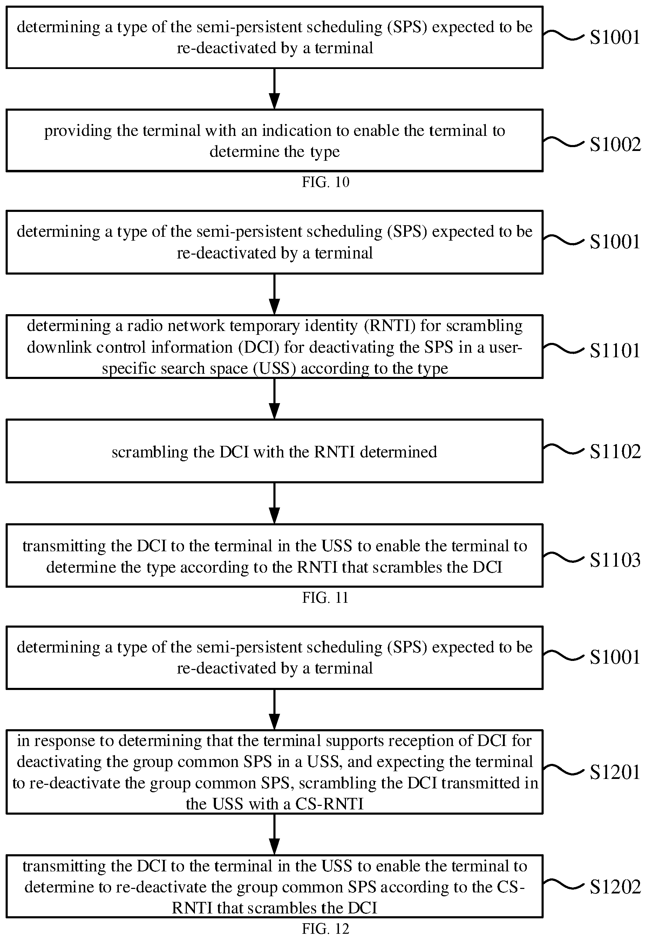

FIG. 10 is a schematic flowchart showing a method for re-deactivating a semi-persistent scheduling according to an embodiment of the present disclosure. The method for determining re-deactivation of the semi-persistent scheduling shown in this embodiment may be performed by a network device, and the network device can communicate with a terminal. The terminal includes, but is not limited to, communication devices, like a mobile phone, a tablet computer, a wearable device, a sensor, or an Internet of Things device. The network device includes, but is not limited to, network devices in 4G, 5G, or 6G communication systems, such as a base station, a core network, etc.

In an embodiment, the network device can configure one or more sets of SPS configurations for the terminal. When a certain SPS needs to be used, the network device can provide the terminal with an indication, so that the terminal activates the certain one SPS, and receives downlink information according to a configuration of the SPS activated.

Subsequently, the network device may also indicate the terminal to deactivate the SPS as required. After deactivating the SPS according to the indication from the network device, the terminal stops using the configuration of the SPS to receive the downlink transmission. However, in some cases, some terminals fail to correctly decode the indication sent by the network device, and thus cannot correctly determine the SPS that needs to be deactivated. The network device can determine whether a terminal has correctly decoded the indication according to information fed back by the terminal, and may re-indicate the terminal to re-deactivate the SPS when it determines that the terminal has not correctly decoded the indication.

The network device may configure various types of SPSs for the terminal. The technical solutions of the present disclosure will be described below with reference to embodiments where the network device configures for the terminal a configuration of a group common semi-persistent scheduling (group common SPS) and a configuration of a user equipment-specific semi-persistent scheduling (UE-specific SPS).

For the group common SPS, during an initial deactivation, downlink control information (DCI) scrambled with a group scheduled-radio network temporary identity (GS-RNTI) may be transmitted in a group common physical downlink control channel (PDCCH) to indicate the deactivation. After receiving the indication, the terminal can decode the DCI and determine an RNTI used for decoding, and then determine according to the RNTI (specifically, a value of the RNTI) that the SPS that needs to be deactivated is the group common SPS.

It should be noted that scrambling the DCI described in all embodiments of the present disclosure may specifically refer to scrambling a cyclic redundancy check (CRC) of the DCI, which is referred to as scrambling the DCI for short.

The terminal may be a terminal supporting a multicast broadcast service (MBS), and the terminal may also support a unicast service.

The above-mentioned group common SPS may be configured to terminals in a same group. However, because different terminals belonging to the same group may have different channel transmission conditions, some terminals can correctly demodulate and determine the RNTI, while some terminals cannot correctly demodulate and determine the RNTI. Terminals that correctly demodulate and determine the RNTI may return acknowledgment information (ACK) to the network device, and terminals that fail to correctly demodulate and determine the RNTI may return non-acknowledgment information (NACK) to the network device. The network device can determine which terminal does not correctly demodulate and determine the RNTI according to the received feedback.

For a terminal that fails to correctly demodulate and determine the RNTI, the network device may re-indicate the terminal to re-deactivate the group common SPS. At present, a way to re-indicate the terminal is realized through a user equipment-specific physical downlink control channel (UE-specific PDCCH), but currently the UE-specific PDCCH is mainly used to deactivate the user equipment-specific semi-persistent scheduling (UE-specific SPS). When the UE-specific PDCCH is used to deactivate the group common SPS, it is difficult for the terminal to determine which type of SPS is intended to be deactivated by the UE-specific PDCCH.

As shown in FIG. 10, the method for re-deactivating a semi-persistent scheduling may include following steps.

In step S1001, a type of the semi-persistent scheduling (SPS) expected to be re-deactivated by a terminal is determined.

In step S1002, the terminal is provided with an indication to enable the terminal to determine the type.

In an embodiment, when the network device indicates the terminal to re-deactivate the SPS, it can determine the type of the semi-persistent scheduling (SPS) that is expected to be re-deactivated by the terminal as required, and then indicate the type of the SPS to be re-deactivated by the terminal, so that the terminal can accurately determine the type of the SPS that needs to be re-deactivated, and then re-deactivate the SPS of the corresponding type, and stop using the configuration of the SPS re-deactivated to communicate with the network device, for example, stop receiving downlink information, thereby avoid re-deactivating a wrong type of SPS to affect the communication effect.

In an embodiment, the type includes at least one of: a group common semi-persistent scheduling (group common SPS); or a user equipment-specific semi-persistent scheduling (UE-specific SPS).

The network device may indicate the terminal to re-deactivate the group common SPS or the UE-specific SPS. When the terminal determines to re-deactivate the group common SPS according to the indication, it can re-deactivate the group common SPS and stop using the configuration of the group common SPS to communicate with the network device. When the terminal determines to re-deactivate the UE-specific SPS according to the indication, it can re-deactivate the UE-specific SPS, and stop using the configuration of the UE-specific SPS to communicate with the network device.

In an embodiment, the indication from the network device includes at least one of: an explicit indication or an implicit indication.

The network device may indicate the terminal in an explicit way. For example, the network device may send to the terminal one or more pieces of information carrying contents that directly indicate the type. The network device may indicate the terminal in an implicit way. For example, the network device sends information to the terminal, and the information has other functions and is not directly used to indicate the type. The terminal can determine the type of the SPS to be re-deactivated according to the information in some ways. For example, the information is DCI in a UE-specific search space (USS), the DCI is scrambled with the RNTI and is not used to indicate the type, but the terminal can determine the type according to the RNTI that scrambles the DCI.

As shown in FIG. 2, for example, for a terminal supporting the MBS, the network device configures at least the configuration of the group common SPS for the terminal, and a period of the group common SPS is 5 slots. For example, as shown in FIG. 2, for the physical downlink shared channel (PDSCH) of the group common SPS, one is in slot#n+1, the next one is in slot#n+6, with an interval of 5 slots.

The network device initially deactivates the group common SPS in slot#n. For example, the network device sends a group common PDCCH to terminals belonging to the same group in the slot#n, and DCI in the group common PDCCH is scrambled with GS-RNTI. If the terminal correctly demodulates and determines an RNTI corresponding to the DCI, it can stop using the configuration of the group common PDCCH to communicate with the network device, for example, the terminal stop receiving the PDSCH of the group common SPS in slot#n+1 and slot#n+6.

The network device can determine whether each terminal correctly demodulates and determines the RNTI corresponding to the DCI according to information fed back by the terminal. For example, if the terminal returns the acknowledgment information (ACK), the network device determines that the terminal correctly demodulates and determines the RNTI; and if the terminal returns the non-acknowledgment information (NACK), the network device determines that the terminal fails to correctly demodulate and determine the RNTI.

In addition, if the network device also configures the configuration of the UE-specific SPS for the terminal, it can transmit DCI scrambled with a configured scheduled-radio network temporary identity (CS-RNTI) in the USS for re-deactivation.

FIG. 11 is a schematic flowchart showing another method for re-deactivating a semi-persistent scheduling according to an embodiment of the present disclosure. As shown in FIG. 11, providing the terminal with the indication to enable the terminal to determine the type includes the following steps.

In step 51101, a radio network temporary identity (RNTI) for scrambling downlink control information (DCI) for deactivating the SPS in a UE-specific search space (USS) is determined according to the type.

In step S1102, the DCI is scrambled with the RNTI determined.

In step S1103, the DCI is transmitted to the terminal in the USS to enable the terminal to determine the type according to the RNTI that scrambles the DCI.

It should be noted that, the terminal may determine whether the DCI is DCI for deactivating the SPS through a specified manner, with a determination condition including at least one of:
the CRC of the DCI being scrambled with the CS-RNTI, or being scrambled with the GS-RNTI;
a new data indicator (NDI) field in the DCI being 0;
a DCI format indicator (DFI) field in the DCI being 0 if the DFI exists in the DCI; or
the DCI including a PDSCH-to-HARQ (hybrid automatic repeat request) feedback timing indicator field for indicating available uplink subframes.

After the above determination, the terminal can further determine whether a validation field in the DCI satisfies a deactivation condition. If the validation field in the DCI satisfies the deactivation condition, the terminal determines how to receive the PDSCH of the SPS according to high-level configuration information corresponding to the configuration of the SPS that needs to be deactivated and dynamic scheduling information in the DCI.

In an embodiment, the network device may transmit the DCI for deactivating the SPS in the USS. For example, the DCI is carried in the UE-specific PDCCH, to indicate a terminal that fails to correctly demodulate and determine the RNTI to re-deactivate the group common SPS.

A correspondence between RNTIs and types of the SPS may be pre-stored in the terminal, and the correspondence is, for example, specified in a protocol or pre-configured by the network device. After receiving the DCI for deactivating the SPS in the USS, the terminal can determine the RNTI that scrambles the DCI. For example, the DCI is descrambled with RNTIs, and an RNTI that successfully descrambles the DCI corresponds to the RNTI that scrambles the DCI, so that the RNTI that scrambles the DCI can be determined according to the RNTI that successfully descrambles the DCI, and then the type of the SPS corresponding to the RNTI that scrambles the DCI is determined according to the RNTI that scrambles the DCI and the correspondence between RNTIs and types of the SPS.

As shown in FIG. 4, the terminal fails to correctly demodulate and determine the RNTI corresponding to the DCI for deactivating the group common SPS in slot#n, and the network device may send a UE-specific PDCCH (which carries DCI scrambled with an RNTI) to the terminal, for example, in slot#n+5, to indicate the terminal to re-deactivate the group common SPS. After re-deactivating the group common SPS, the terminal stops using the configuration of the group common SPS to communicate with the network device, for example stops receiving the PDSCH of the group common SPS in slot#n+6.

In an embodiment, determining the RNTI for scrambling the DCI in the USS according to the type includes: in response to expecting the terminal to re-deactivate the group common SPS, scrambling the DCI with a first RNTI; and/or in response to expecting the terminal to re-deactivate the UE-specific SPS, scrambling the DCI with a second RNTI.

The correspondence between RNTIs and types of the SPS may be pre-stored in the network device and the terminal. In this correspondence, the first RNTI corresponds to the group common SPS, and the second RNTI corresponds to the UE-specific SPS. When the network device needs to indicate the terminal to re-deactivate the group common SPS, the DCI may be scrambled with the first RNTI. When network device needs to indicate the terminal to re-deactivate the UE-specific SPS, the DCI may be scrambled with the second RNTI.

The first RNTI and/or the second RNTI may be different from RNTI(s) in the related art, or may reuse the RNTI(s) in the related art, which may be specifically determined as required.

In an embodiment, the first RNTI is different from a GS-RNTI for scrambling DCI for initially deactivating the group common SPS, and/or is different from a CS-RNTI for scrambling DCI for initially deactivating the UE-specific SPS.

The DCI for initially deactivating the group common SPS is transmitted in a common search space (CSS), and information transmitted in the CSS can be received by multiple terminals. The DCI for initially deactivating the UE-specific SPS is transmitted in the USS, and information transmitted in the USS is generally only be received by a designated terminal.

However, in some cases, there exists an overlapping part between the CSS and the USS. If the DCI for deactivating the SPS transmitted in the USS happens to be in this overlapping part, the DCI for deactivating the SPS transmitted in the USS will be received by multiple terminals. If the RNTI that scrambles the DCI for deactivating the SPS transmitted in the USS is the same as the CS-RNTI for scrambling the DCI for initially deactivating the UE-specific SPS or the GS-RNTI for scrambling the DCI for initially deactivating the group common SPS, other terminals, after receiving the DCI for deactivating the SPS transmitted in the USS, will deactivate respective SPSs according to the successfully decoded and determined RNTI, causing other terminal to erroneously deactivate the SPS.

Therefore, according to embodiments of the present disclosure, a new RNTI may be introduced as the first RNTI, which is different from the GS-RNTI for scrambling the DCI for initially deactivating the group common SPS and the CS-RNTI for scrambling the DCI for initially deactivating the UE-specific SPS, so as to prevent other terminals from erroneously deactivating the SPS.

In an embodiment, the first RNTI is the same as the GS-RNTI for scrambling the DCI for initially deactivating the group common SPS.

Although the introduction of the new RNTI as the first RNTI can prevent other terminals from erroneously deactivating the SPS, the introduction of the new RNTI will bring relatively large adjustments to the communication architecture, and the erroneous deactivation of the SPS generally occurs in a not very common case where the CSS partially overlaps the USS.

In view of this, in embodiments of the present disclosure, the GS-RNTI for scrambling the DCI for initially deactivating the group common SPS may be reused to scramble the DCI for deactivating the SPS transmitted in the USS. After receiving the DCI for deactivating the SPS transmitted in the USS, the terminal can determine that the network device indicates the terminal to re-deactivate the group common SPS when the RNTI that scrambles the DCI is determined to be the GS-RNTI. In this way, it is advantageous to reducing modifications to the communication architecture.

FIG. 12 is a schematic flowchart showing yet another method for re-deactivating a semi-persistent scheduling according to an embodiment of the present disclosure. As shown in FIG. 12, providing the terminal with the indication to enable the terminal to determine the type includes the following steps.

In step S1201, in response to determining that the terminal supports reception of the DCI for deactivating the group common SPS in the USS, and expecting the terminal to re-deactivate the group common SPS, the DCI transmitted in the USS is scrambled with the CS-RNTI.

In step S1202, the DCI is transmitted to the terminal in the USS to enable the terminal to determine to re-deactivate the group common SPS according to the CS-RNTI that scrambles the DCI.

In an embodiment, it may be specified in advance in a protocol that in a case where the terminal supports reception of the DCI for deactivating the group common SPS in the USS, when the terminal receives the DCI scrambled with the CS-RNTI in the USS, it is considered by default that the network device indicates the terminal to re-deactivate the group common SPS.

Then, when it is determined that the terminal itself supports reception of the DCI for deactivating the group common SPS in the USS, if the terminal needs to deactivate the group common SPS, and the terminal can receive the DCI scrambled with the CS-RNTI in the USS, the terminal may considered by default that the network device indicates the terminal to re-deactivate the group common SPS after receiving the DCI scrambled with the CS-RNTI in the USS, so that the terminal re-deactivates the group common SPS, rather than considering that the network device indicates the terminal to re-deactivate the UE-specific SPS.

In an embodiment, the terminal is configured with the group common SPS and not configured with the UE-specific SPS.

Since when the terminal receives the DCI scrambled with the CS-RNTI in the USS, it will not consider that the network device indicates the terminal to re-deactivate the UE-specific SPS, and thus it will not re-deactivate the UE-specific SPS, which, to a certain extent, will result in that the UE-specific SPS cannot be successfully re-deactivated, even if the terminal is configured with the configuration of the UE-specific SPS. In view of this, for this case, the network device may choose to only configure the configuration of the group common SPS for the terminal, not configure the configuration of the UE-specific SPS for the terminal, so as to reducing waste of resources.

Certainly, it is also possible that the network device configures both the configuration of the group common SPS and the configuration of the UE-specific SPS for the terminal, which may be selected as required.

In an embodiment, providing the terminal with the indication to enable the terminal to determine the type includes: in response to determining that the terminal supports reception of the DCI for deactivating the group common SPS in a preset USS, and expecting the terminal to re-deactivate the group common SPS, scrambling the DCI transmitted in the preset USS with the CS-RNTI; and transmitting the DCI to the terminal in the preset USS to enable the terminal to determine to re-deactivate the group common SPS according to the CS-RNTI that scrambles the DCI.

In an embodiment, it may be specified in advance in a protocol that in a case where the terminal supports reception of the DCI for deactivating the group common SPS in the preset USS, when the terminal receives the DCI scrambled with the CS-RNTI in the preset USS, it is considered by default that the network device indicates the terminal to re-deactivate the group common SPS.

Then, when the terminal itself supports reception of the DCI for deactivating the group common SPS in the preset USS, if the terminal receives the DCI scrambled with the CS-RNTI in the preset USS, it may be considered by default that the network device indicates the terminal to re-deactivate the group common SPS, so that the terminal re-deactivates the group common SPS, rather than considering that the network device indicates the terminal to re-deactivate the UE-specific SPS.

When the DCI scrambled with the CS-RNTI is received in other USSs other than the preset USS, it may be considered that the network device indicates the terminal to re-deactivate the UE-specific SPS, so that the terminal re-deactivates the UE-specific SPS. A difference from embodiments shown in FIG. 12 lies in that in this embodiment, only for the DCI that is scrambled with the CS-RNTI and transmitted in the preset USS, the terminal considers by default that it indicates to re-deactivate the group common SPS, while for the DCI that is scrambled with the CS-RNTI and transmitted in other USSs, the terminal does not consider by default that it indicates to re-deactivate the group common SPS.

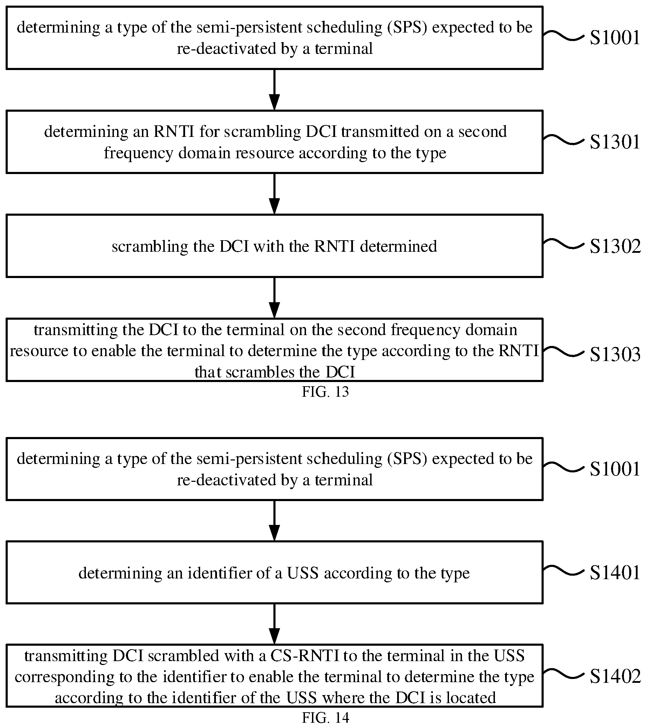

FIG. 13 is a schematic flowchart showing yet another method for re-deactivating a semi-persistent scheduling according to an embodiment of the present disclosure As shown in FIG. 13, the terminal is configured with the group common SPS and/or the UE-specific SPS on a first frequency domain resource, and providing the terminal with the indication to enable the terminal to determine the type includes the following steps.

In step S1301, an RNTI for scrambling DCI transmitted on a second frequency domain resource is determined according to the type.

In step S1302, the DCI is scrambled with the RNTI determined.

In step S1303, the DCI is transmitted to the terminal on the second frequency domain resource to enable the terminal to determine the type according to the RNTI that scrambles the DCI.

It should be noted that the DCI may be in the USS of the terminal. However, in a case where the second frequency domain resource is exclusively configured for the terminal, the DCI may be in the USS of the terminal, or may not be in the USS of the terminal.

In an embodiment, the group common SPS and/or the UE-specific SPS configured by the network device for the terminal may be specific to the first frequency domain resource. In this case, the network device may transmit the DCI scrambled with the RNTI on the second frequency domain resource to indicate the type of the SPS that needs to be re-deactivated by the terminal.

Certainly, the network device may also transmit the DCI scrambled with the RNTI on the first frequency domain resource to indicate the type of the SPS that needs to be re-deactivated by the terminal, which may be specifically selected by the network device as required.

In an embodiment, the first frequency domain resource includes a first component carrier (CC), and the second frequency domain resource includes a second CC; and/or the first frequency domain resource includes a first bandwidth part (BWP), and the second frequency domain resource includes a second BWP.

As shown in FIG. 7, for example, the network device configures the group common SPS and the UE-specific SPS for the terminal on the first CC, and the terminal fails to correctly demodulate and determine the RNTI corresponding to the DCI for deactivating the group common SPS in slot#n, the network device can send the UE-specific PDCCH (which carries the DCI scrambled with the RNTI) to the terminal on the second CC, for example, in slot#n+5, to indicate the terminal to re-deactivate the group common SPS on the first CC, and the terminal re-deactivates the group common SPS, and stops using the configuration of the group common SPS to communicate with the network device, for example, the terminal stops receiving the PDSCH of the group common SPS in slot#n+6.

For example, the network device configures the group common SPS and the UE-specific SPS for the terminal on the first BWP, and the network device can send the DCI scrambled with the RNTI to the terminal in the USS on the second BWP to indicate the terminal whether to re-deactivate the group common SPS or to re-deactivate the UE-specific SPS.

It should be noted that, in embodiments of the present disclosure, the format of the DCI may be DCI format 1_1 or DCI format 1_2. Since the DCI in these two formats can carry frequency domain related information, it is convenient to indicate a frequency domain resource where the SPS to be deactivated is located, for example, indicate the CC, the BWP or the like where the SPS to be deactivated is located.

FIG. 14 is a schematic flowchart showing yet another method for re-deactivating a semi-persistent scheduling according to an embodiment of the present disclosure. As shown in FIG. 14, providing the terminal with the indication to enable the terminal to determine the type includes the following steps.

In step S1401, an identifier of the USS is determined according to the type.

In step S1402, the DCI scrambled with the CS-RNTI is transmitted to the terminal in the USS corresponding to the identifier to enable the terminal to determine the type according to the identifier of the USS where the DCI is located.

In an embodiment, a correspondence between identifiers (for example, IDs) of the USS and types of the SPS may be pre-stored in the network device and the terminal. The network device can determine the type of the SPS that needs to be re-deactivated by the terminal, query an identifier of the USS corresponding to the determined type according to the correspondence between identifiers of the USS and types of the SPS, and transmit the DCI for deactivating the SPS in the USS corresponding to the identifier of the USS to the terminal. After receiving the DCI for deactivating the SPS in the USS, the terminal can determine the identifier of the USS where the DCI is located, and then determine the type of the SPS corresponding to the identifier according to the correspondence between identifiers and types of the SPS.

As shown in FIG. 9, for example, the network device configures at least two USS identities for the terminal, which are USS#1 and USS#2. In the correspondence between identifiers of the USS and types of the SPS pre-stored in the terminal, USS#1 corresponds to the UE-specific SPS, and the USS#2 corresponds to the group common SPS.

The terminal fails to correctly demodulate and determine the RNTI corresponding to the DCI for deactivating the group common SPS in slot#n, the network device can send the UE-specific PDCCH to the terminal in slot#n+5, and the DCI scrambled with the RNTI carried therein is in the USS corresponding to the USS#2. After receiving the DCI carried in the UE-specific PDCCH transmitted in the slot#n+5, the terminal can determine that the DCI is in the USS corresponding to the USS#2, and can determine that the USS#2 corresponds to the group common SPS, and thus deactivate the group common SPS, and subsequently, the terminal can stop receiving downlink information in the PDSCH corresponding to the group common SPS (for example, located in slot#n+6).

In addition, the terminal may also send the UE-specific PDCCH to the terminal in the USS corresponding to the USS#1 as required, for example, send the UE-specific PDCCH to the terminal in slot#n+4. The terminal receives the DCI carried in the UE-specific PDCCH transmitted in the slot#n+4, and can determine that the DCI is in the USS corresponding to the USS#1, and determine that the USS#1 corresponds to the UE-specific SPS, and thus deactivate the UE-specific SPS, and subsequently, the terminal can stop receiving downlink information in the PDSCH corresponding to the UE-specific SPS (for example, in slot#n+6).

In the above embodiments, the ways in which the network device indicates the terminal to deactivate which SPS are mainly implicit ways. That is, the type of the SPS that needs to be deactivated by the terminal is not directly indicated by the DCI, but by the RNTI that scrambles the DCI. In the following embodiments, technical solutions of the present disclosure will be described with reference to an explicit indication.

In an embodiment, providing the terminal with the indication to enable the terminal to determine the type includes: sending indication information to the terminal to indicate the type.

In an embodiment, the indication information includes at least one of: a medium access control layer control element (MAC CE); a radio access control (RRC) signaling; or downlink control information (DCI).

In an embodiment, the network device may indicate the type of the SPS that needs to be deactivated by the terminal by an explicit indication. For example, the network device may send one or more pieces of indication information to the terminal, and contents carried in the one or more pieces of indication information directly indicate the type. The indication information may be sent in a form of the MAC CE, may be sent in a form of the RRC signaling, and may also be sent in a form of the DCI, which may be selected as required.

In an embodiment, the indication information includes the DCI, and sending the indication information to the terminal to indicate the type includes: indicating the type by using an information field other than a validation field in the DCI.

In an embodiment, when the network device indicates the terminal the type of the SPS to be deactivated via the DCI, for example indicates the terminal to deactivate the group common SPS, or indicates the terminal to deactivate the UE-specific SPS, the network device may indicate the terminal by using some information fields in the DCI. However, for the validation field in the DCI, because bits in the validation field are used for validation, if they are changed, a series of problems will be caused. Therefore, in this embodiment, when the DCI is used to indicate the type of the SPS to be deactivated by the terminal, the information field other than the validation field is used to carry the indication. Correspondingly, after receiving the DCI, the terminal can determine the type of the SPS to be deactivated according to the information field other than the validation field in the DCI, so as to avoid problems caused by changing the bits in the validation field.

In an embodiment, indicating the type by using the information field other than the validation field in the DCI includes: indicating the type by using a hybrid automatic repeat request process number (HPN) field in the DCI.

In an embodiment, the terminal has multiple sets of SPS configurations of the type, and the method further includes: deactivating a target SPS configuration in the multiple sets of SPS configurations of the type according to a value of the HPN field.

In an embodiment, the network device indicates the type by using the information field other than the validation field in the DCI.

For example, specifically, the type may be indicated by using the HPN field in the DCI. Correspondingly, after receiving the DCI, the terminal may determine the type of the SPS to be deactivated according to the HPN field in the DCI.

It should be noted that the HPN field can also be used as the validation field in some cases, for example, when only one set of SPS configuration is configured for the terminal. The network device indicates the type through the HPN field when the HPN field is not used as the validation field. For example, the type is indicated by one bit of the HPN field, with the value of 1 indicating the group common SPS, and the value of 1 indicating the UE-specific SPS.

In addition, regarding some information fields in the DCI, such as a frequency domain resource assignment (FDRA) field, a redundancy version (RV) field, a modulation and coding scheme (MCS) field, these information fields can also be used as the validation field in some cases. When the terminal indicates the type through these information fields, it is required that these information fields are not used as the validation field.

In an embodiment, the type of the SPS to be deactivated can be determined according to the information field other than the validation field in the DCI. The information field other than the validation field in the DCI is an information field of non-validation fields in the DCI other than the FDRA, RV, MCS, and HPN fields, for example, the type of the SPS to be deactivated may be indicated by one bit, with the value of 0 indicating the UE-specific SPS, and the value of 1 indicating the group common SPS.

In an embodiment, for a certain type of SPS, the terminal may have multiple sets of SPS configurations, for example, the multiple sets of SPS configurations may have different parameters, such as different periods. The multiple sets of SPS configurations may be configured by the network device, or may be specified in a protocol.

When the terminal has multiple sets of SPS configurations of the type, when the network device indicates the type of the SPS to be deactivated by the terminal through the HPN field, the network device can further indicate the terminal to deactivate which set of SPS configuration of the type through the HPN field, and the set of SPS configuration to be deactivated is for example called the target SPS configuration.

The network device and the terminal each may store an association relationship between values of the HPN field and SPS configurations. When the network device deactivates a set of SPS configuration by using a value of the HPN field, the terminal can determine the set of SPS configuration corresponding to the value of the HPN field according to the association relationship, and then deactivate the set of SPS configuration. Accordingly, the deactivation of a certain set of SPS configuration can be realized, which is beneficial to improving the accuracy of deactivating the SPS.

For example, the HPN field has 4 bits, which can indicate values of 0 to 15. For example, the terminal has 8 sets of SPS configurations for the UE-specific SPS, and their indexes are 0 to 7 respectively. A first association relationship between values of the HPN field and SPS configurations of the UE-specific SPS includes that the value of 0 is associated with the index of 0, the value of 1 is associated with the index of 1, the value of 2 is associated with the index of 2, the value of 3 is associated with the index of 3, the value of 4 is associated with the index of 4, the value of 5 is associated with the index of 5, the value of 6 is associated with the index of 6, and the value of 7 is associated with the index of 7.

When the UE-specific SPS needs to be deactivated, the network device can provide an indication through the value of the HPN field ranging from 0 to 7. For example, when the SPS configuration corresponding to the index of 1 is to be deactivated, the value of the HPN field in the DCI sent by the network device may be 1. After receiving the DCI, the terminal determines that the value of the HPN field in the DCI is 1, and can determine according to the first association relationship that the corresponding index is 1, so that the terminal can deactivate the SPS configuration of the UE-specific SPS corresponding to the index of 1.

In an embodiment, the terminal may be configured with any one or more of multiple types of SPSs, for example, the terminal is configured with multiple types of SPSs, and there are multiple sets of SPS configurations for each type of SPS. The network device can deactivate one of multiple sets of SPS configurations of a type of SPS through the HPN field, and can also deactivate one of multiple sets of SPS configurations of another type of SPS through the HPN field.

For example, in the above-mentioned embodiments, the terminal has 8 sets of SPS configurations of the UE-specific SPS, and the network device can indicate the terminal to deactivate any one of the 8 sets of SPS configurations through the value of the HPN field ranging from 0 to 7.

On this basis, the terminal may also have 8 sets of SPS configurations (which for example are configured by the network device or determined according to a protocol) for the group common SPS, and their indexes are 0 to 7, respectively. A second association relationship between values of the HPN field and SPS configurations of the group common SPS includes that the value of 8 is associated with the index of 0, the value of 9 is associated with the index of 1, the value of 10 is associated with the index of 2, the value of 11 is associated with the index of 3, the value of 12 is associated with the index of 4, the value of 13 is associated with the index of 5, the value of 14 is associated with the index of 6, and the value of 15 is associated with the index of 7.

When the group common SPS needs to be deactivated, the network device can provide an indication through the value of the HPN field ranging from 8 to 15. For example, when the SPS configuration corresponding to the index of 3 is to be deactivated, the value of the HPN field in the DCI sent by the network device may be 10. After receiving the DCI, the terminal determines that the value of the HPN field in the DCI is 1, and can determine according to the second association relationship that the corresponding index is 2, so that the terminal can deactivate the SPS configuration of the group common SPS corresponding to the index of 2.

In an embodiment, the terminal can determine to deactivate which set of SPS configuration of the group common SPS according to a formula mod(HPN value, M), where the HPN value represents a value corresponding to the HPN field, M represents a number of SPS configurations of the group common SPS, and mod represents a modulo operation. When the HPN value is greater than or equal to 8, the terminal determines to deactivate which set of SPS configuration of the group common SPS according to this formula.

For example, when M=8, and the SPS configuration corresponding to the index of 3 is to be deactivated, the value of the HPN field (i.e., the HPN value) in the DCI sent by the network device may be 10. The terminal brings the HPN value=10 and M=8 into the above formula to calculate mod(10,8) to obtain a value of 2, and then can determine to deactivate the SPS configuration of the group common SPS corresponding to the index of 2.

It should be noted that the number of the SPS configurations of the UE-specific SPS that the terminal has is not limited to 8 as described in the above embodiments, and the number of the SPS configurations of the group common SPS that the terminal has is also not limited to 8 as described in the above embodiments, both of which can be specifically set as required.

In an embodiment, the range of the HPN value for indicating the group common SPS may be determined according to the number of the SPS configurations of the UE-specific SPS and the number of the SPS configurations of the group common SPS. For example, if the network device has configured 4 SPS configurations for the UE-specific SPS and 4 SPS configurations for the group common SPS, the HPN values of 0-3 are used to indicate to deactivate the UE-specific SPS index, and the HPN values of 4-7 are used to indicate to deactivate the group common SPS index.

In an embodiment, the terminal is configured with the group common SPS and the UE-specific SPS, and the method further includes: in response to activating one of the group common SPS and the UE-specific SPS, stopping activating another one of the group common SPS and the UE-specific SPS by using the DCI scrambled with the CS-RNTI.

In an embodiment, when the terminal is configured with both of the group common SPS and the UE-specific SPS, since in general, the terminal cannot use both the group common SPS and the UE-specific SPS at the same time, so when the network device has activated one of the group common SPS and the UE-specific SPS, the network device can stop activating another one of the group common SPS and the UE-specific SPS by using the DCI scrambled with the CS-RNTI.

For example, when the network device has activated the group common SPS, the network device can stop activating the UE-specific SPS by using the DCI scrambled with the CS-RNTI. For example, when the network device has activated the UE-specific SPS, the network device can stop activating the group common SPS by using the DCI scrambled with the CS-RNTI.

In an embodiment, the terminal is configured with the group common SPS and the UE-specific SPS, and the method further includes: in response to activating one of the group common SPS and the UE-specific SPS, stopping deactivating another one of the group common SPS and the UE-specific SPS by using the DCI scrambled with the CS-RNTI.

In an embodiment, when the terminal is configured with both of the group common SPS and the UE-specific SPS, since in general, the terminal cannot use both the group common SPS and the UE-specific SPS at the same time, so when the network device has activated one of the group common SPS and the UE-specific SPS, another one of the group common SPS and the UE-specific SPS is generally not activated, so the network device can stop deactivating the another one of the group common SPS and the UE-specific SPS by using the DCI scrambled with the CS-RNTI.

For example, when the network device has activated the group common SPS, the network device can stop deactivating the UE-specific SPS by using the DCI scrambled with the CS-RNTI. That is, in this case, the network device deactivates the group common SPS by using the DCI scrambled with the CS-RNTI.

For example, when the network device has activated the UE-specific SPS, the network device can stop deactivating the group common SPS by using the DCI scrambled with the CS-RNTI. That is, in this case, the network device deactivates the UE-specific SPS by using the DCI scrambled with the CS-RNTI.

Corresponding to the foregoing embodiments of the method for determining re-deactivation of a semi-persistent scheduling and the method for re-deactivating a semi-persistent scheduling, the present disclosure also provides embodiments of an apparatus for determining re-deactivation of a semi-persistent scheduling and an apparatus for re-deactivating a semi-persistent scheduling.

Embodiments of the present disclosure provide an apparatus for determining re-deactivation of a semi-persistent scheduling, and the apparatus is applicable to a terminal. The terminal includes, but is not limited to, communication devices, like a mobile phone, a tablet computer, a wearable device, a sensor, or an Internet of Things device. The terminal can communicate with a network device, and the network device includes, but is not limited to, network devices in 4G, 5G, or 6G communication systems, such as a base station, a core network, etc.

In an embodiment, the apparatus includes: one or more processors configured to determine a type of the semi-persistent scheduling to be re-deactivated according to an indication from a network device.

In an embodiment, the type includes at least one of: a group common semi-persistent scheduling (group common SPS); or a user equipment-specific semi-persistent scheduling (UE-specific SPS).

In an embodiment, the indication from the network device includes at least one of: an explicit indication or an implicit indication.

In an embodiment, the processor is configured to: receive downlink control information (DCI) for deactivating the SPS transmitted in a UE-specific search space (USS); and determine the type according to a radio network temporary identity (RNTI) that scrambles the DCI.

In an embodiment, the processor is configured to: in response to the RNTI that scrambles the DCI being a first RNTI, determine to re-deactivate the group common SPS; and/or in response to the RNTI that scrambles the DCI being a second RNTI, determine to re-deactivate the UE-specific SPS.

In an embodiment, the first RNTI is different from a GS-RNTI for scrambling DCI for initially deactivating the group common SPS, and/or is different from a CS-RNTI for scrambling DCI for initially deactivating the UE-specific SPS.

In an embodiment, the first RNTI is the same as a GS-RNTI for scrambling DCI for initially deactivating the group common SPS.

In an embodiment, the processor is configured to: in response to supporting reception of DCI for deactivating the group common SPS in a USS, determine to re-deactivate the group common SPS when DCI scrambled with a CS-RNTI is received in the USS.

In an embodiment, the terminal is configured with the group common SPS and is not configured with the UE-specific SPS.

In an embodiment, the processor is configured to: in response to supporting reception of DCI for deactivating the group common SPS in a preset USS, determine to re-deactivate the group common SPS when DCI scrambled with a CS-RNTI is received in the preset USS.

In an embodiment, the terminal is configured with the group common SPS and/or the UE-specific SPS on a first frequency domain resource, and the processor is configured to: determine the type according to an RNTI that scrambles DCI transmitted by the network device on a second frequency domain resource.

In an embodiment, the first frequency domain resource includes a first component carrier (CC), and the second frequency domain resource includes a second CC; and/or the first frequency domain resource includes a first bandwidth part (BWP), and the second frequency domain resource includes a second BWP.

In an embodiment, the processor is configured to: receive DCI for deactivating the SPS transmitted in a USS; and determine the type according to an identifier of the USS where the DCI is located.

In an embodiment, the processor is configured to: determine the type according to indication information sent by the network device.

In an embodiment, the indication information includes at least one of: a medium access control layer control element (MAC CE); a radio access control (RRC) signaling; or DCI.

In an embodiment, the indication information includes the DCI, and the processor is configured to: determine the type according to an information field other than a validation field in the DCI.

In an embodiment, the processor is configured to: determine the type according to a hybrid automatic repeat request process number (HPN) field in the DCI.

In an embodiment, the terminal has multiple sets of SPS configurations of the type, and the processor is further configured to: determine to deactivate a target SPS configuration in the multiple sets of SPS configurations of the type according to a value of an HPN field.

In an embodiment, the terminal is configured with the group common SPS and the UE-specific SPS, and the processor is further configured to: in response to determining that the network device activates one of the group common SPS and the UE-specific SPS, not expect the network device to activate another one of the group common SPS and the UE-specific SPS by using DCI scrambled with a CS-RNTI.

In an embodiment, the terminal is configured with the group common SPS and the UE-specific SPS, and the processor is further configured to: in response to determining that the network device activates one of the group common SPS and the UE-specific SPS, not expect the network device to deactivate another one of the group common SPS and the UE-specific SPS by using DCI scrambled with a CS-RNTI.

Embodiments of the present disclosure provide an apparatus for re-deactivating a semi-persistent scheduling, the apparatus is applicable to a network device, and the network device can communicate with a terminal. The terminal includes, but is not limited to, communication devices, like a mobile phone, a tablet computer, a wearable device, a sensor, or an Internet of Things device. The network device includes, but is not limited to, network devices in 4G, 5G, or 6G communication systems, such as a base station, a core network, etc.

In an embodiment, the apparatus includes: one or more processors configured to: determine a type of the semi-persistent scheduling (SPS) expected to be re-deactivated by a terminal; and provide the terminal with an indication to enable the terminal to determine the type.

In an embodiment, the type includes at least one of: a group common semi-persistent scheduling (group common SPS); or a user equipment-specific semi-persistent scheduling (UE-specific SPS).

In an embodiment, the indication from the network device includes at least one of: an explicit indication or an implicit indication.

In an embodiment, the processor is further configured to: determine a radio network temporary identity (RNTI) for scrambling downlink control information (DCI) for deactivating the SPS in a UE-specific search space (USS) according to the type; scrambling the DCI with the RNTI determined; and transmit the DCI to the terminal in the USS to enable the terminal to determine the type according to the RNTI that scrambles the DCI.

In an embodiment, the processor is configured to: in response to expecting the terminal to re-deactivate the group common SPS, scramble the DCI by a first RNTI; and/or in response to expecting the terminal to re-deactivate the UE-specific SPS, scramble the DCI by a second RNTI.

In an embodiment, the first RNTI is different from a GS-RNTI for scrambling DCI for initially deactivating the group common SPS, and/or is different from a CS-RNTI for scrambling DCI for initially deactivating the UE-specific SPS.

In an embodiment, the first RNTI is the same as a GS-RNTI for scrambling DCI for initially deactivating the group common SPS.

In an embodiment, the processor is configured to: in response to determining that the terminal supports reception of DCI for deactivating the group common SPS in a USS, and expecting the terminal to re-deactivate the group common SPS, scramble the DCI transmitted in the USS with a CS-RNTI; and transmit the DCI to the terminal in the USS to enable the terminal to determine to re-deactivate the group common SPS according to the CS-RNTI that scrambles the DCI.

In an embodiment, the terminal is configured with the group common SPS and is not configured with the UE-specific SPS.

In an embodiment, the processor is configured to: in response to determining that the terminal supports reception of DCI for deactivating the group common SPS in a preset USS, and expecting the terminal to re-deactivate the group common SPS, scramble the DCI transmitted in the preset USS with a CS-RNTI; and transmit the DCI to the terminal in the preset USS to enable the terminal to determine to re-deactivate the group common SPS according to the CS-RNTI that scrambles the DCI.

In an embodiment, the terminal is configured with the group common SPS and/or the UE-specific SPS on a first frequency domain resource, and the processor is configured to: determine an RNTI for scrambling DCI transmitted on a second frequency domain resource according to the type; scramble the DCI with the RNTI determined; and transmit the DCI to the terminal on the second frequency domain resource to enable the terminal to determine the type according to the RNTI that scrambles the DCI.

In an embodiment, the first frequency domain resource includes a first component carrier (CC), and the second frequency domain resource includes a second CC; and/or the first frequency domain resource includes a first bandwidth part (BWP), and the second frequency domain resource includes a second BWP.

In an embodiment, the processor is configured to: determine an identifier of a USS according to the type; and transmit DCI scrambled with a CS-RNTI to the terminal in the USS corresponding to the identifier to enable the terminal to determine the type according to the identifier of the USS where the DCI is located.

In an embodiment, the processor is configured to: send indication information to the terminal to indicate the type.

In an embodiment, the indication information includes at least one of: a medium access control layer control element (MAC CE); a radio access control (RRC) signaling; or DCI.

In an embodiment, the indication information includes the DCI, and the processor is configured to: indicate the type by using an information field other than a validation field in the DCI.

In an embodiment, the processor is configured to: indicate the type by using a hybrid automatic repeat request process number (HPN) field in the DCI.

In an embodiment, the terminal has multiple sets of SPS configurations of the type, and the processor is further configured to: deactivate a target SPS configuration in the multiple sets of SPS configurations of the type according to a value of an HPN field.

In an embodiment, the terminal is configured with the group common SPS and the UE-specific SPS, and the processor is further configured to: in response to activating one of the group common SPS and the UE-specific SPS, stop activating another one of the group common SPS and the UE-specific SPS by using DCI scrambled with a CS-RNTI.

In an embodiment, the terminal is configured with the group common SPS and the UE-specific SPS, and the processor is further configured to: in response to activating one of the group common SPS and the UE-specific SPS, stop deactivating another one of the group common SPS and the UE-specific SPS by using DCI scrambled with a CS-RNTI.

With respect to the apparatuses in the above embodiments, the specific manners of individual modules therein for performing operations have been described in detail in the embodiments of related methods, which will not be elaborated here.

As for the apparatus embodiments, since they are substantially correspond to the method embodiments, for related parts, reference is made to the partial description of the method embodiments. The above-described apparatus embodiments are merely illustrative, in which modules described as separate components may be or may not be physically separated, and components displayed as modules may be or may not be physical modules, that is, they may be located at one place or distributed to a plurality of network modules. Some or all of the modules may be selected as required to achieve the objects of embodiments of the present disclosure, and they could be understood and implemented by those skilled in the art without creative efforts.

Embodiments of the present disclosure also provide a communication device, such as the terminal as described above. The communication device includes: a processor; and a memory for storing computer programs. When the computer programs are executed by the processor, the method for determining re-deactivation of a semi-persistent scheduling as described in any embodiment above is implemented.

Embodiments of the present disclosure also provide a communication device, such as the network device as described above. The communication device includes: a processor; and a memory for storing computer programs. When the computer programs are executed by the processor, the method for re-deactivating a semi-persistent scheduling as described in any embodiment above is implemented.

Embodiments of the present disclosure also provide a computer-readable storage medium having stored therein computer programs that, when executed by a processor, causes steps in the method for determining re-deactivation of a semi-persistent scheduling as described in any embodiment above to be implemented.

Embodiments of the present disclosure also provide a computer-readable storage medium having stored therein computer programs that, when executed by a processor, causes steps in the method for re-deactivating a semi-persistent scheduling as described in any embodiment above to be implemented.

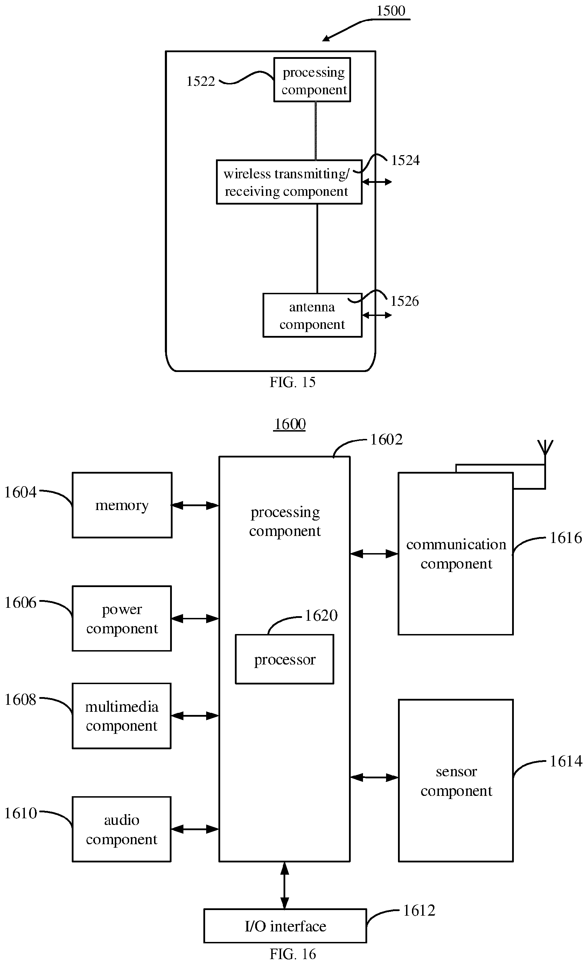

As shown in FIG. 15, FIG. 15 is a schematic block diagram showing an apparatus 1500 for re-deactivating a semi-persistent scheduling according to an embodiment of the present disclosure. The apparatus 1500 may be provided as a base station. Referring to FIG. 15, the apparatus 1500 includes a processing component 1522, a wireless transmitting/receiving component 1524, an antenna component 1526, and a signal processing part specific to a wireless interface. The processing component 1522 may further include one or more processors. One of the processors in the processing component 1522 may be configured to implement the method for re-deactivating a semi-persistent scheduling as described in any embodiment above.

FIG. 16 is a schematic block diagram showing an apparatus 1600 for determining re-deactivation of a semi-persistent scheduling according to an embodiment of the present disclosure. For example, the apparatus 1600 may be a mobile phone, a computer, a digital broadcast terminal, a messaging device, a gaming console, a tablet, a medical device, an exercise equipment, a personal digital assistant, and the like.

Referring to FIG. 16, the apparatus 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the apparatus 1600, such as the operations associated with display, telephone calls, data communications, camera operations, and recording operations. The processing component 1602 may include one or more processors 1620 to execute instructions to perform all or some of the steps in the method for determining re-deactivation of a semi-persistent scheduling as described above. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the apparatus 1600. Examples of such data include instructions for any applications or methods operated on the apparatus 1600, contact data, phonebook data, messages, pictures, videos, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the apparatus 1600. The power component 1606 may include a power management system, one or more power sources, and any other components associated with the generation, management, and distribution of power in the apparatus 1600.

The multimedia component 1608 includes a screen providing an output interface between the apparatus 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and/or the rear camera may receive an external multimedia datum while the apparatus 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone (MIC) configured to receive an external audio signal when the apparatus 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as keyboards, click wheels, buttons, and the like. The buttons may include, but are not limited to, a home button, a volume button, a starting button, and a locking button.

The sensor component 1614 includes one or more sensors to provide status assessments of various aspects of the apparatus 1600. For instance, the sensor component 1614 may detect an open/closed status of the apparatus 1600, relative positioning of components, e.g., the display and the keypad, of the apparatus 1600, a change in position of the apparatus 1600 or a component of the apparatus 1600, a presence or absence of user contact with the apparatus 1600, an orientation or an acceleration/deceleration of the apparatus 1600, and a change in temperature of the apparatus 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wireless, between the apparatus 1600 and other devices. The apparatus 1600 can access a wireless network based on a communication standard, such as WiFi, 2G, 3G, 4G LTE, 5G NR or a combination thereof. In an illustrative embodiment, the communication component 1616 receives a broadcast signal or broadcast associated information from an external broadcast management system via a broadcast channel. In an illustrative embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the apparatus 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method for determining re-deactivation of a semi-persistent scheduling as described above.

In illustrative embodiments, there is also provided a non-transitory computer-readable storage medium including instructions, such as included in the memory 1604, executable by the processor 1620 in the apparatus 1600, for performing the method for determining re-deactivation of a semi-persistent scheduling as described above. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the present disclosure disclosed here. This present disclosure is intended to cover any variations, uses, or adaptations of the present disclosure following the general principles thereof and including such departures from the present disclosure as come within known or customary practice in the art. It is intended that the specification and embodiments be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a..." does not exclude the existence of another identical element in the process, method, article or device that includes the element.

The methods and apparatuses provided by embodiments of the present disclosure have been described in detail above, and specific examples are used to illustrate the principle and implementations of the present disclosure. The description of the above embodiments is only used to help understand the methods and core ideas of the present disclosure. At the same time, for those skilled in the art, some changes may be made in the specific implementations and application scope according to the idea of the present disclosure. In summary, the content of the specification should not be construed as a limitation on the present disclosure.

## Claims

1. A method for determining re-deactivation of a semi-persistent scheduling, performed by a terminal, comprising:
determining a type of the semi-persistent scheduling to be re-deactivated according to an indication from a network device.

2. The method according to claim 1, wherein the type comprises at least one of:
a group common semi-persistent scheduling (group common SPS); or
a user equipment-specific semi-persistent scheduling (UE-specific SPS).

3. The method according to claim 1, wherein the indication from the network device comprises at least one of:
an explicit indication or an implicit indication.

4. The method according to claim 2, wherein determining the type of the semi-persistent scheduling to be re-deactivated according to the indication from the network device comprises:
receiving downlink control information (DCI) for deactivating the SPS transmitted in a UE-specific search space (USS); and
determining the type according to a radio network temporary identity (RNTI) that scrambles the DCI.

5. The method according to claim 4, wherein determining the type according to the RNTI that scrambles the DCI comprises:
in response to the RNTI that scrambles the DCI being a first RNTI, determining to re-deactivate the group common SPS; and/or
in response to the RNTI that scrambles the DCI being a second RNTI, determining to re-deactivate the UE-specific SPS.

6. The method according to claim 5, wherein the first RNTI is different from a group scheduled-radio network temporary identity (GS-RNTI) for scrambling DCI for initially deactivating the group common SPS, and/or is different from a configured scheduled-radio network temporary identity (CS-RNTI) for scrambling DCI for initially deactivating the UE-specific SPS.

7. The method according to claim 5, wherein the first RNTI is the same as a group scheduled-radio network temporary identity (GS-RNTI) for scrambling DCI for initially deactivating the group common SPS.

8. The method according to claim 2, wherein determining the type of the semi-persistent scheduling to be re-deactivated according to the indication from the network device comprises:
in response to supporting reception of downlink control information (DCI) for deactivating the group common SPS in a UE-specific search space (USS), determining to re-deactivate the group common SPS when DCI scrambled with a configured scheduled-radio network temporary identity (CS-RNTI) is received in the USS.

9. The method according to claim 8, wherein the terminal is configured with the group common SPS and is not configured with the UE-specific SPS.

10. The method according to claim 2, wherein determining the type of the semi-persistent scheduling to be re-deactivated according to the indication from the network device comprises:
in response to supporting reception of downlink control information (DCI) for deactivating the group common SPS in a preset UE-specific search space (USS), determining to re-deactivate the group common SPS when DCI scrambled with a configured scheduled-radio network temporary identity (CS-RNTI) is received in the preset USS.

11. The method according to claim 2, wherein the terminal is configured with the group common SPS and/or the UE-specific SPS on a first frequency domain resource, and determining the type of the semi-persistent scheduling to be re-deactivated according to the indication from the network device comprises:
determining the type according to a radio network temporary identity (RNTI) that scrambles downlink control information (DCI) transmitted by the network device on a second frequency domain resource.

12. The method according to claim 11, wherein the first frequency domain resource comprises a first component carrier (CC), and the second frequency domain resource comprises a second CC; and/or
the first frequency domain resource comprises a first bandwidth part (BWP), and the second frequency domain resource comprises a second BWP.

13. The method according to claim 2, wherein determining the type of the semi-persistent scheduling to be re-deactivated according to the indication from the network device comprises:
receiving downlink control information (DCI) for deactivating the SPS transmitted in a UE-specific search space (USS); and
determining the type according to an identifier of the USS where the DCI is located.

14. The method according to claim 2, wherein determining the type of the semi-persistent scheduling to be re-deactivated according to the indication from the network device comprises:
determining the type according to indication information sent by the network device.

15. The method according to claim 14, wherein the indication information comprises at least one of:
a medium access control layer control element (MAC CE);
a radio access control (RRC) signaling; or
downlink control information (DCI).

16. The method according to claim 15, wherein the indication information comprises the DCI, and determining the type according to the indication information sent by the network device comprises:
determining the type according to an information field other than a validation field in the DCI.

17. The method according to claim 16, wherein determining the type according to the information field other than the validation field in the DCI comprises:
determining the type according to a hybrid automatic repeat request process number (HPN) field in the DCI.

18. The method according to claim 16, wherein the terminal has multiple sets of SPS configurations of the type, and the method further comprises:
determining to deactivate a target SPS configuration in the multiple sets of SPS configurations of the type according to a value of a hybrid automatic repeat request process number (HPN) field.

19. The method according to claim 2, wherein the terminal is configured with the group common SPS and the UE-specific SPS, and the method further comprises:
in response to determining that the network device activates one of the group common SPS and the UE-specific SPS, not expecting the network device to activate another one of the group common SPS and the UE-specific SPS by using downlink control information (DCI) scrambled with a configured scheduled-radio network temporary identity (CS-RNTI).

20. The method according to claim 2, wherein the terminal is configured with the group common SPS and the UE-specific SPS, and the method further comprises:
in response to determining that the network device activates one of the group common SPS and the UE-specific SPS, not expecting the network device to deactivate another one of the group common SPS and the UE-specific SPS by using downlink control information (DCI) scrambled with a configured scheduled-radio network temporary identity (CS-RNTI).

21. A method for re-deactivating a semi-persistent scheduling, performed by a network device, comprising:
determining a type of the semi-persistent scheduling (SPS) expected to be re-deactivated by a terminal; and
providing the terminal with an indication to enable the terminal to determine the type.

22. The method according to claim 21, wherein the type comprises at least one of:
a group common semi-persistent scheduling (group common SPS); or
a user equipment-specific semi-persistent scheduling (UE-specific SPS).

23. The method according to claim 21, wherein the indication from the network device comprises at least one of: an explicit indication or an implicit indication.

24. The method according to claim 22, wherein providing the terminal with the indication to enable the terminal to determine the type comprises:
determining a radio network temporary identity (RNTI) for scrambling downlink control information (DCI) for deactivating the SPS in a UE-specific search space (USS) according to the type;
scrambling the DCI with the RNTI determined; and
transmitting the DCI to the terminal in the USS to enable the terminal to determine the type according to the RNTI that scrambles the DCI.

25. The method according to claim 24, wherein determining the RNTI for scrambling the DCI in the USS according to the type comprises:
in response to expecting the terminal to re-deactivate the group common SPS, scrambling the DCI with a first RNTI; and/or
in response to expecting the terminal to re-deactivate the UE-specific SPS, scrambling the DCI with a second RNTI.

26. The method according to claim 25, wherein the first RNTI is different from a group scheduled-radio network temporary identity (GS-RNTI) for scrambling DCI for initially deactivating the group common SPS, and/or is different from a configured scheduled-radio network temporary identity (CS-RNTI) for scrambling DCI for initially deactivating the UE-specific SPS.

27. The method according to claim 26, wherein the first RNTI is the same as a group scheduled-radio network temporary identity (GS-RNTI) for scrambling DCI for initially deactivating the group common SPS.

28. The method according to claim 22, wherein providing the terminal with the indication to enable the terminal to determine the type comprises:
in response to determining that the terminal supports reception of downlink control information (DCI) for deactivating the group common SPS in a UE-specific search space (USS), and expecting the terminal to re-deactivate the group common SPS, scrambling the DCI transmitted in the USS with a configured scheduled-radio network temporary identity (CS-RNTI); and
transmitting the DCI to the terminal in the USS to enable the terminal to determine to re-deactivate the group common SPS according to the CS-RNTI that scrambles the DCI.

29. The method according to claim 28, wherein the terminal is configured with the group common SPS and is not configured with the UE-specific SPS.

30. The method according to claim 22, wherein providing the terminal with the indication to enable the terminal to determine the type comprises:
in response to determining that the terminal supports reception of downlink control information (DCI) for deactivating the group common SPS in a preset UE-specific search space (USS), and expecting the terminal to re-deactivate the group common SPS, scrambling the DCI transmitted in the preset USS with a configured scheduled-radio network temporary identity (CS-RNTI); and
transmitting the DCI to the terminal in the preset USS to enable the terminal to determine to re-deactivate the group common SPS according to the CS-RNTI that scrambles the DCI.

31. The method according to claim 22, wherein the terminal is configured with the group common SPS and/or the UE-specific SPS on a first frequency domain resource, and providing the terminal with the indication to enable the terminal to determine the type comprises:
determining a radio network temporary identity (RNTI) for scrambling downlink control information (DCI) transmitted on a second frequency domain resource according to the type;
scrambling the DCI with the RNTI determined; and
transmitting the DCI to the terminal on the second frequency domain resource to enable the terminal to determine the type according to the RNTI that scrambles the DCI.

32. The method according to claim 31, wherein the first frequency domain resource comprises a first component carrier (CC), and the second frequency domain resource comprises a second CC; and/or
the first frequency domain resource comprises a first bandwidth part (BWP), and the second frequency domain resource comprises a second BWP.

33. The method according to claim 22, wherein providing the terminal with the indication to enable the terminal to determine the type comprises:
determining an identifier of a UE-specific search space (USS) according to the type; and
transmitting downlink control information (DCI) scrambled with a configured scheduled-radio network temporary identity (CS-RNTI) to the terminal in the USS corresponding to the identifier to enable the terminal to determine the type according to the identifier of the USS where the DCI is located.

34. The method according to claim 22, wherein providing the terminal with the indication to enable the terminal to determine the type comprises:
sending indication information to the terminal to indicate the type.

35. The method according to claim 34, wherein the indication information comprises at least one of:
a medium access control layer control element (MAC CE);
a radio access control (RRC) signaling; or
downlink control information (DCI).

36. The method according to claim 35, wherein the indication information comprises the DCI, and sending the indication information to the terminal to indicate the type comprises:
indicating the type by using an information field other than a validation field in the DCI.

37. The method according to claim 36, wherein indicating the type by using the information field other than the validation field in the DCI comprises:
indicating the type by using a hybrid automatic repeat request process number (HPN) field in the DCI.

38. The method according to claim 36, wherein the terminal has multiple sets of SPS configurations of the type, and the method further comprises:
deactivating a target SPS configuration in the multiple sets of SPS configurations of the type according to a value of a hybrid automatic repeat request process number (HPN) field.

39. The method according to claim 22, wherein the terminal is configured with the group common SPS and the UE-specific SPS, and the method further comprises:
in response to activating one of the group common SPS and the UE-specific SPS, stopping activating another one of the group common SPS and the UE-specific SPS by using downlink control information (DCI) scrambled with a configured scheduled-radio network temporary identity (CS-RNTI).

40. The method according to claim 22, wherein the terminal is configured with the group common SPS and the UE-specific SPS, and the method further comprises:
in response to activating one of the group common SPS and the UE-specific SPS, stopping deactivating another one of the group common SPS and the UE-specific SPS by using downlink control information (DCI) scrambled with a configured scheduled-radio network temporary identity (CS-RNTI).

41. An apparatus for determining re-deactivation of a semi-persistent scheduling, comprising: one or more processors configured to determine a type of the semi-persistent scheduling to be re-deactivated according to an indication from a network device.

42. An apparatus for re-deactivating a semi-persistent scheduling, comprising: one or more processors configured to: determine a type of the semi-persistent scheduling (SPS) expected to be re-deactivated by a terminal; and provide the terminal with an indication to enable the terminal to determine the type.

43. A communication device, comprising:
a processor; and
a memory for storing computer programs;
wherein when the computer programs are executed by the processor, the method for determining re-deactivation of a semi-persistent scheduling according to any one of claims 1 to 20 is implemented.

44. A communication device, comprising:
a processor; and
a memory for storing computer programs;
wherein when the computer programs are executed by the processor, the method for re-deactivating a semi-persistent scheduling according to any one of claims 21 to 40 is implemented.

45. A computer readable storage medium having stored therein computer programs that, when executed by a processor, cause the method for determining re-deactivation of a semi-persistent scheduling according to any one of claims 1 to 20 to be implemented.

46. A computer readable storage medium having stored therein computer programs that, when executed by a processor, cause the method for re-deactivating a semi-persistent scheduling according to any one of claims 21 to 40 to be implemented.
